(19) Europäisches Patentamt / European Patent Office / Office européen des brevets

(11) **EP 4 194 502 B1**

(12) **EUROPEAN PATENT SPECIFICATION**

(45) Date of publication and mention of the grant of the patent:
**12.02.2025 Bulletin 2025/07**

(21) Application number: **21213962.0**

(22) Date of filing: **13.12.2021**

(51) International Patent Classification (IPC):
***C08L 23/12*** *(2006.01)*

(52) Cooperative Patent Classification (CPC):
(C-Sets available)
**C08L 23/12;** C08L 2203/16; C08L 2207/20;
Y02W 30/62                    (Cont.)

(54) **POLYOLEFIN COMPOSITION COMPRISING POLYPROPYLENE HOMOPOLYMER AND RECYCLED PLASTIC MATERIAL**

POLYOLEFINZUSAMMENSETZUNG MIT POLYPROPYLENHOMOPOLYMER UND RECYCELTEM KUNSTSTOFFMATERIAL

COMPOSITION DE POLYOLÉFINE COMPRENANT UN HOMOPOLYMÈRE DE POLYPROPYLÈNE ET UN MATÉRIAU PLASTIQUE RECYCLÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**14.06.2023 Bulletin 2023/24**

(73) Proprietor: **Borealis AG**
**1020 Vienna (AT)**

(72) Inventors:
• **KAHLEN, Susanne Margarete**
**4021 Linz (AT)**
• **LEGRAS, Angelica Maëlle Delphine**
**4021 Linz (AT)**
• **MILEVA, Daniela**
**4021 Linz (AT)**
• **BRAUN, Hermann**
**4021 Linz (AT)**
• **JERABEK, Michael**
**4021 Linz (AT)**
• **STOCKREITER, Wolfgang**
**4021 Linz (AT)**
• **KASTNER, Erwin**
**4021 Linz (AT)**

(74) Representative: **Maikowski & Ninnemann Patentanwälte Partnerschaft mbB**
**Postfach 15 09 20**
**10671 Berlin (DE)**

(56) References cited:
**EP-A1- 3 406 662          EP-B1- 2 845 876**
**WO-A1-2020/070176      WO-A1-2021/032460**

• **CURTZWILER GREG W ET AL: "Mixed post-consumer recycled polyolefins as a property tuning material for virgin polypropylene", JOURNAL OF CLEANER PRODUCTION, ELSEVIER, AMSTERDAM, NL, vol. 239, 12 August 2019 (2019-08-12), XP085816937, ISSN: 0959-6526, [retrieved on 20190812], DOI: 10.1016/ J.JCLEPRO.2019.117978**

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08L 23/12, C08L 23/12, C08L 23/06, C08L 51/06, C08K 7/14**

## Description

The invention relates to a polyolefin composition comprising at least one polypropylene homopolymer and recycled plastic material, to an article comprising the polyolefin composition and a process for preparing such polyolefin composition.

## Description

Polyolefins, in particular polyethylene and polypropylene are increasingly consumed in large amounts in a wide range of applications, including packaging for food and other goods, fibres, automotive components, and a great variety of manufactured articles. Polyethylene based materials are a particular problem as these materials are extensively used in packaging. Taking into account the huge amount of waste collected compared to the amount of waste recycled back into the stream, there is still a great potential for intelligent reuse of plastic waste streams and for mechanical recycling of plastic wastes.

Generally, recycled quantities of polypropylene on the market are mixtures of both polypropylene (PP) and polyethylene (PE), this is especially true for post-consumer waste streams. Moreover, commercial recyclates from post-consumer waste sources are conventionally cross-contaminated with non-polyolefin materials such as polyethylene terephthalate, polyamide, polystyrene or non-polymeric substances like wood, paper, glass or aluminum. These cross-contaminations drastically limit final applications of recycling streams such that no profitable final uses remain. Polyolefinic recycling materials, especially from post-consumer waste streams, are a mixture of PE and PP. The better the quality of the recyclate is, the less available it is and the more expensive it is.

Customers that are asking for recyclates require similar stiffness-impact strength as virgin ones. This is also valid for reinforced glass fibre compounds for structural products. The quality issue in recyclates compared to the virgin ones can be to some extent overcome by reinforcing the recyclates, where the reinforcement particles physically bond the dissimilar domains (PP and PE).

Compositions comprising virgin polymers (i.e. polymers used for the first time) and recycled mixed plastics have been studied.

WO 2014167493 A1 describes a process for the preparation of a polyolefin mixture comprising the step (a) of mixing together a base polymeric mixture MB and a polymeric mixture MPR, wherein said mixture MPR is obtained from the recycling of post-consumer plastic materials.

Recycled mixed plastics reinforced with glass fibre (GF) have also been studied. For example, recycled PP or PP/PE mixtures have been reinforced with GF or a hybrid GF with other fillers.

EP 2845876 B1 describes a composition containing two or more resins and a glass fiber, comprising: a resin mixture comprising waste polyethylene (PE) and waste polypropylene (PP); a long glass fiber with a length of 10 mm or greater; and a rubber-based resin, wherein the composition comprises, based on 100 parts by weight of the resin mixture, 3-30 parts by weight of the long glass fiber, 10-50 parts by weight of the rubber-based resin, and 10-35 parts by weight of LDPE.

EP 3406662 A1 describes structurally-reinforced plastic composite products produced with recycled waste glass fibers and recycled polymer compounds and process for making the same. The reinforced composite article, comprises: a recycled fiberglass collected from waste streams and functioning as a filler, the recycled fiberglass being 30-70% of a total weight of the reinforced composite article; a colorant of 1-2 % of the total weight of the reinforced composite article; and a recycled resin collected from the waste streams and substantially wetting-out the recycled glass fiber by the black colorant and a chemical binder. The recycled resin comprises at least one of high density polyethylene (HDPE), polypropylene (PP) or an engineering grade resin.

Bajracharya et al. (Experimental and theoretical studies on the properties of injection moulded glass fibre reinforced mixed plastics composites." Composites Part A: Applied Science and Manufacturing, 2016, 84: 393-405) and Bajracharya, et al. (Durability characteristics and property prediction of glass fibre reinforced mixed plastics composites." Composites Part B: Engineering, 2017, 116: 16-29) use PE/PP recyclate in the form of flakes by Repeat Plastics (Replas) Pty of Australia which was collected from post-consumer and post-industrial plastic waste. The recyclate had tensile modulus of 906 MPa. They were reinforced with 10, 20 and 30 % GF (length of 4.0 mm and diameter of 13.7 $\mu$m). A maximum tensile modulus of 3068 MPa was achieved by 30 % GF.

Thus, there are examples of reinforced recyclates with a good tensile modulus and impact strength at the same time. However, it would be of an advantage to provide polyolefin compositions having similar properties as virgin polymers, but comprise also post-consumer recyclate (PCR) to make the final solutions more economically friendly in regard to $CO_2$ footprint.

Thus, it was an object of the invention to provide a polyolefin composition comprising polyolefin material recovered from waste plastic material with an improved stiffness-impact strength balance and a high tensile strength.

This object has been solved by providing a polyolefin composition comprising:

a) 30-60 wt% (based on the overall weight of the polyolefin composition) of at least one polypropylene homopolymer,

b) 15-40 wt% (based on the overall weight of the polyolefin composition) of a mixed-plastics polypropylene blend of recycled material having

(i) a crystalline fraction (CF) content determined according to CRYSTEX QC analysis in the range from 91.0 to 94.0 wt%, and

(ii) a soluble fraction (SF) content determined according to CRYSTEX QC analysis in the range from 6.0 to 9.0 wt%, whereby

(iii) said crystalline fraction (CF) has a propylene content (C3(CF)) as determined by FT-IR spectroscopy calibrated by quantitative $^{13}$C-NMR spectroscopy, in the range from 95.0 to 99.0 wt%; preferably 96.0 to 98.0 wt% and whereby

(iv) said crystalline fraction (CF) has an ethylene content (C2(CF)), as determined by FT-IR spectroscopy calibrated by quantitative $^{13}$C-NMR spectroscopy, in the range from 1.0 to 5.0 wt% preferably 2.0 to 4.0 wt%, more preferably 2.5 to 3.5 wt%; and

(v) said soluble fraction (SF) has an intrinsic viscosity (iV(SF)) in the range from 1.10 to below 1.50 dl/g, preferably 1.20 to 1.40 dl/g; and whereby

(vi) the mixed-plastics polypropylene blend has inorganic residues as measured by calcination analysis (TGA) according to DIN ISO 1172:1996 of 0.05 to 3.0 wt%, preferably 0.05 to 2.5 wt%, optionally 1.0 to 2.5 wt% with respect to the mixed-plastics polypropylene blend; and whereby

(vii) the mixed-plastics polypropylene blend does not contain benzene above the detection limit of HS GC-MS 80°C/2h; and whereby

(viii) the mixed-plastics polypropylene blend has a CIELAB color space (L*a*b*) of

- L* from 72.0 to 97.0 preferably from 80.0 to 97.0;
- a* from -5.0 to 0.0;
- b* from 0.0 to below 22.0, usually from above 8.0 to below 22.0.

c) 15-30 wt% based on the overall weight of the polyolefin composition) of glass fibers;

d) 0.5-2.5 wt% (based on the overall weight of the polyolefin composition) of at least one coupling agent, and optionally further additives, wherein the sum of all ingredients add always up to 100 wt%,

wherein the polyolefin composition has

- a melt flow rate MFR$_2$ (230°C, 2.16 kg, measured according to ISO 1133) of at least 5 g/10 min;
- a tensile modulus at 23°C of at least 5000 MPa (ISO 527-2), and
- a tensile stress at yield at 23°C of at least 80 MPa (50 mm/min, ISO 527-2).

Accordingly, a polypropylene recyclate of high quality is mixed with a virgin polypropylene polymer and glass fibres to obtain a polyolefin composition with excellent mechanical properties, in particular excellent tensile strength, while retaining properties of the final composition comparable to virgin polymers.

The present recyclate containing composition is characterized by a high tensile modulus combined with a high tensile stress. The performance of the combination of the different kinds of polymers and recyclates with glass fiber reinforcement is not easily predictable. It is in particular difficult to predict a tensile modulus and tensile stress due to the interaction between the various components. In addition recyclate polyolefins are typically contaminated with polar polymers (e.g. PA, PET) or other non-POs such as PS or fillers etc., which make an obvious calculation of the final mechanical performance more difficult.

The term "virgin" denotes the newly produced materials and/or objects prior to first use and not being recycled. In case that the origin of the polymer is not explicitly mentioned the polymer is a "virgin" polymer.

For the purposes of the present description and of the subsequent claims, the term "recycled" is used to indicate that the material is recovered from post-consumer waste and/or industrial waste. Namely, post-consumer waste refers to objects having completed at least a first use cycle (or life cycle), i.e. having already served their first purpose and been through the hands of a consumer; while industrial waste refers to the manufacturing scrap which does normally not reach a consumer. In the gist of the present invention "recycled polymers" may also comprise up to 17 wt%, preferably up to 3 wt%, more preferably up to 1 wt% and even more preferably up to 0.1 wt% based on the overall weight of the recycled polymer of other components originating from the first use. Type and amount of these components influence the physical properties of the recycled polymer. The physical properties given below refer to the main component of the recycled polymer.

Mixed plastics is defined as the presence of low amounts of compounds usually not found in virgin polypropylene blends such as polystyrenes, polyamides, polyesters, wood, paper, limonene, aldehydes, ketones, fatty acids, metals, and/or long term decomposition products of stabilizers. Virgin polypropylene blends denote blends as directly originating from the production process without intermediate use. As a matter of definition, "mixed plastics" can be equated with detectable amounts of polystyrene and/or polyamide-6 and/or limonene and/or fatty acids.

It will be understood by those skilled in the art that a soluble fraction (SF) as obtained by CRYSTEX QC analysis having an intrinsic viscosity (iV(SF)) in the range from 1.10 to below 1.50 dl/g is typically found in material from recycling streams. In a preferred aspect of the invention the soluble fraction (SF) as obtained by CRYSTEX QC analysis has an intrinsic viscosity (iV(SF)) in the range from 1.20 to below 1.40 dl/g.

As described further below more than one polypropylene homopolymer may be used in the polyolefin composition.

The total amount of all virgin polypropylene polymers used in the present polyolefin composition adds up according to the invention to a range between 30-60 wt%, preferably between 35-55 wt%, more preferably between 40-50 wt%, even more preferably between 43-48 wt% (based on the overall weight of the polyolefin composition).

The amount of the of the mixed-plastics polypropylene blend, which is preferably recovered from a waste plastic material derived from post-consumer and/or post-industrial waste, used in the present polyolefin composition is according to the invention in a range between 15-40 wt%, preferably between 20-35 wt%, more preferably between 25-35 wt% (based on the overall weight of the polyolefin composition).

The amount of glass fibers used in the present polyolefin composition is according to the invention in a range between 15-30 wt%, preferably between 18-25 wt%, more preferably between 20-23 wt%, (based on the overall weight of the polyolefin composition).

The amount of the at least one coupling agent used in the present polyolefin composition is according to the invention in a range between 0.5-2.5 wt%, preferably 0.5-2.0 wt%, more preferably 1.0-1.5 wt% (based on the overall weight of the polyolefin composition).

It is to be understood that further additives may also be included in the polyolefin composition and the sum of all ingredients adds always up to 100 wt% in each of the embodiments described herein.

According to an embodiment the present polyolefin composition comprises

a) 40-50 wt%, (based on the overall weight of the polyolefin composition) of the at least one polypropylene homopolymer,
b) 25-35 wt% (based on the overall weight of the polyolefin composition) of the mixed-plastics polypropylene blend;
c) 18-25 wt% (based on the overall weight of the polyolefin composition) of glass fibers;
d) 0.5-2.0 wt% (based on the overall weight of the polyolefin composition) of the at least one coupling agent, and optionally further additives, wherein the sum of all ingredients add always up to 100 wt%.

In an embodiment the present polyolefin composition is further characterized by a melt flow rate $MFR_2$ (ISO 1133, 2.16 kg, 230°C, measured according to ISO 1133) in the range between 5 and 20 g/10 min, preferably between 5 and 15 g/10min, more preferably between 5 and 10 g/10min, even more preferably between 5 and 8 g/10min.

In another embodiment, the present polyolefin composition is characterized by a tensile modulus (ISO 527-2) of at least 5100 MPa, preferably of at least 5200 MPa; more preferably of at least 5500 MPa, in particular in a range between 5000 and 10000 MPa, more in particular in a range between 5000 and 8000 MPa.

In a further embodiment, the present polyolefin composition has a tensile stress at yield at 23°C (50 mm/min, ISO 527-2) of at least 81 MPa, preferably at least 82 MPa, more preferably of at least 83 MPa, even more preferably of at least 84 MPa. The tensile stress at yield may reach 90 MPa, preferably 88MPa. Thus, the range of tensile stress at yield of the present polyolefin composition may be between 80 MPa and 90 MPa, preferably between 82 MPa and 89 MPa, even more preferably between 84 MPa and 88 MPa.

In still another embodiment, the present polyolefin composition has a tensile stress at break at 23°C (50 mm/min, ISO 527-2) of at least 80.5 MPa, preferably at least 82 MPa, more preferably of at least 83 MPa. The tensile stress at break may reach 90 MPa, preferably 88MPa. Thus, the range of tensile stress at break of the present polyolefin composition may be between 80 MPa and 90 MPa, preferably between 82 MPa and 89 MPa, even more preferably between 83 MPa and 88 MPa.

In yet a further embodiment, the present polyolefin composition has an impact strength (ISO179-1, Charpy 1eA +23°C) of at least 5.0 $kJ/m^2$, preferably of at least 6 $kJ/m^2$, more preferably at least 6.5 $kJ/m^2$, still more preferably of at least 7.0 $kJ/m^2$, in particular in a range between 6.0 and 10.0 $kJ/m^2$, more in particular in a range between 7.0 and 9.0 $kJ/m^2$, even more particular in a range between 7.5 and 8.5 $kJ/m^2$.

In an embodiment of the present polyolefin composition more than one virgin polypropylene homopolymer may be used.

Thus, in an embodiment the present polyolefin composition may comprise

a1) at least one first polypropylene homopolymer;
a2) at least one second polypropylene homopolymer;

wherein the at least one first polypropylene homopolymer, and the at least one second polypropylene homopolymer differ from each other in their melt flow rate $MFR_2$ (230°C, 2.16 kg load, measured according to ISO 1133).

Thus, the present polyolefin composition may comprise two virgin polypropylene homopolymers with different melt flow rates. This allows for an adjustment of the melt flow rate of the final polyolefin composition.

The polypropylene homopolymer used as virgin polymers in the present polyolefin composition is selected from a group comprising

- at least one polypropylene homopolymer (PPH-1) having a melt flow rate $MFR_2$ (230°C, 2.16 kg, measured according to ISO 1133) in the range of 5 to 15 g/10 min, preferably of 5 to 10 g/10min, more preferably of 8 g/10 min;
- at least one polypropylene homopolymer (PPH-2) having a melt flow rate $MFR_2$ (230°C, 2.16 kg, measured according to ISO 1133) in the range of range of 10 to 30 g/10min, preferably of 15 to 25 g/10min, more preferably of 20 g/10 min;
- at least one polypropylene homopolymer (PPH-3) having a melt flow rate $MFR_2$ (230°C, 2.16 kg, measured according to ISO 1133) in the range of 60 to 100 g/10 min, preferably of 70 to 80 g/10min, more preferably of 75 g/10 min;
- at least one polypropylene homopolymer (PPH-4) having a melt flow rate $MFR_2$ (230°C, 2.16 kg, measured according to ISO 1133) in the range of 100 to 150 g/10 min, preferably of 110 to 130 g/10 min, more preferably of 125 g/10 min;
- at least one polypropylene homopolymer (PPH-5) having a melt flow rate $MFR_2$ (230°C, 2.16 kg, measured according to ISO 1133) in the range of 600 to 1000 g/10 min, preferably of 700 to 900 g/10 min, preferably of 800 g/10 min;
- at least one polypropylene homopolymer (PPH-6) having a melt flow rate $MFR_2$ (230°C, 2.16 kg, measured according to ISO 1133) in the range of $\leq$ 1.5 g/10 min, preferably in the range between 0.15 to 0.5 g/10min, more preferably of 0.3 to 0.45 g/10 min, even more, more preferably of 0.2 g/ 10 min.

Polypropylene Virgin Polymers

The properties and features of the different polypropylene homopolymers that may be used in the present polyolefin composition are described in the following.

Polypropylene homopolymer (PPH-1):

The at least one polypropylene homopolymer (PPH-1) has a melt flow rate $MFR_2$ (230°C, 2.16 kg, measured according to ISO 1133) in the range of 5 to 15 g/10 min, preferably of 5 to 10 g/10min, more preferably of 8 g/10 min; and a tensile modulus (ISO178) of higher than 800 MPa, preferably higher than 1000 MPa, more preferably of higher than 1300 MPa

The polypropylene homopolymer (PPH-1) has a melting temperature of at least 150°C; preferably of at least 158°C, preferably in the range of 158 to 167°C, like 162°C. The polypropylene homopolymer (PPH-1) may have a flexural modulus measured according to ISO 178 of at least 500 MPa, preferably at least 1000 MPa, preferably in the range of 1200 to 2000 MPa, like 1400 MPa.

A preferred material for polypropylene homopolymer (PPH-1) is inter alia commercially available from Borealis AG (Austria). Alternative suitable materials are high crystallinity polypropylene homopolymers as described for example in WO 03/031174 A2.

Polypropylene homopolymer (PPH-2):

The at least one polypropylene homopolymer (PPH-2) has a melt flow rate $MFR_2$ (230°C, 2.16 kg, measured according to ISO 1133) in the range of 10 to 30 g/10min, preferably of 15 to 25 g/10min, preferably of 20 g/10 min; and a tensile modulus (ISO 527-2) of higher than 1800 MPa, preferably higher than 2000 MPa, most preferably of 2200 MPa..

The polypropylene homopolymer (PPH-2) consists substantially, i.e. of more than 99.7 wt%, still more preferably of at least 99.8 wt%, of propylene units, based on the weight of the propylene homopolymer (PPH-2). In a preferred embodiment only propylene units are detectable in the propylene homopolymer (PPH-2).

It is appreciated that the polypropylene homopolymer (PPH-2) features a low amount of xylene cold soluble (XCS) fraction. The polypropylene homopolymer (PPH-2) may have an amount of xylene cold solubles (XCS) fraction of not more than 4.0 wt%, preferably not more than 3.0 wt%, more preferably not more than 2.5 wt%, like in the range of 0.1 to 4.0 wt%, preferably in the range of 0.1 to 3.0 wt%, more preferably in the range from 0.1 to 2.5 wt%, based on the weight of the polypropylene homopolymer (PPH-2).

The polypropylene homopolymer (PPH-2) may have a heat deflection temperature (HDT) measured according to according to ISO 75-2 of at least 90°C. preferably at least 100°C, more preferably at least 115°C, like in the range of 90 to 160°C, preferably in the range of 100 to 150°C, more preferably 115 to 130°C.

The polypropylene homopolymer (PPH-2) may have a Charpy Impact Strength measured according to ISO 179-1eA:2000 at 23°C of at least 1.0 kJ/m$^2$, preferably, at least 2.0 kJ/m$^2$, like in the range of 1.0 to 10 kJ/m$^2$, preferably in the range of 2.0 to 5.0 kJ/m$^2$, like 2.5 kJ/m$^2$. The polypropylene homopolymer (PPH-2) may have a flexural modulus measured according to ISO 178 of at least 500 MPa, preferably at least 1500 MPa, like in the range of 500 to 3500 MPa, preferably in the range of 1500 to 2500 MPa, like 2000 MPa.

The polypropylene homopolymer (PPH-2) may comprise a nucleating agent, which is preferably a polymeric nucleating agent, more preferably an alpha-nucleating agent, e.g. a polymeric alpha-nucleating agent. The alpha-nucleating agent content of the polypropylene homopolymer (PPH-2), is preferably up to 5.0 wt%. In a preferred embodiment, the polypropylene homopolymer (PPH-2) contains not more than 3000 ppm, more preferably of 1 to 2000 ppm of alpha-nucleating agent.

The polypropylene homopolymer (PPH-2) is known in the art and commercially available from Borealis AG.

Polypropylene homopolymer (PPH-3):

The at least one polypropylene homopolymer (PPH-3) has a melt flow rate MFR$_2$ (230°C, 2.16 kg, measured according to ISO 1133) in the range of 60 to 100 g/10 min, preferably in the range of 70 to 80 g/10min, even more preferably of 75 g/10 min;

The polypropylene homopolymer (PPH-3) consists substantially, i.e. of more than 99.7 wt%, still more preferably of at least 99.8 wt%, of propylene units, based on the weight of the polypropylene homopolymer (PPH-3). In a preferred embodiment only propylene units are detectable in the polypropylene homopolymer (PPH-3).

It is appreciated that the polypropylene homopolymer (PPH-3) features a low amount of xylene cold soluble (XCS) fraction. The polypropylene homopolymer (PPH-3) may have an amount of xylene cold solubles (XCS) fraction of not more than 4.0 wt%, preferably not more than 3.5 wt%, like in the range of 0.1 to 4.0 wt%, preferably in the range of 0.1 to 3.5 wt%, based on the weight of the polypropylene homopolymer (PPH-3).

The polypropylene homopolymer (PPH-3) may have a heat deflection temperature (HDT) measured according to according to ISO 75-2 of at least 50°C, preferably at least 60°C, more preferably at least 75°C, like in the range of 50 to 120°C, preferably in the range of 60 to 100°C, more preferably 75 to 90°C.

The polypropylene homopolymer (PPH-3) may have a Charpy Notched Impact Strength (NIS) measured according to ISO 179-1 eA at 23°C of at least 0.5 kJ/m$^2$, preferably, at least 0.7 kJ/m$^2$, like in the range of 0.5 to 1.5 kJ/m$^2$, preferably in the range of 0.7 to 1.3 kJ/m$^2$, like 1.0 kJ/m$^2$. The polypropylene homopolymer (PPH-3) may have a flexural modulus measured according to ISO 178 of at least 500 MPa, preferably at least 1000 MPa, like in the range of 500 to 2500 MPa, preferably in the range of 1000 to 2000 MPa, like 1500 MPa.

In case the polypropylene homopolymer (PPH-3) comprises an alpha-nucleating agent it is appreciated that the polypropylene homopolymer (PPH-3) may comprise the alpha-nucleating agent in an amount of up to 5.0 wt%, based on the weight of the polypropylene homopolymer (PPH-3), preferably up to 3000 ppm, like in the range of 1 to 2000 ppm. However, in a preferred embodiment the polypropylene homopolymer (PPH-3) does not comprise any nucleating agent, i.e. the polypropylene homopolymer (PPH-3) is not nucleated.

The polypropylene homopolymer (PPH-3) is known in the art and commercially available from Borealis AG.

Polypropylene homopolymer (PPH-4):

The at least one polypropylene homopolymer (PPH-4) has a melt flow rate MFR$_2$ (230°C, 2.16 kg, measured according to ISO 1133) in the range of 100 to 150 g/10 min, preferably of 110 to 130 g/10 min, more preferably of 125 g/10 min.

The polypropylene homopolymer (PPH-4) may have a Charpy Notched Impact Strength (NIS) measured according to ISO 179-1 eA at 23°C of at least 0.5 kJ/m$^2$, preferably, at least 0.7 kJ/m$^2$, like in the range of 0.5 to 1.5 kJ/m$^2$, preferably in the range of 0.7 to 1.3 kJ/m$^2$, like 1.0 kJ/m$^2$.The polypropylene homopolymer (PPH-3) may have a flexural modulus measured according to ISO 178 of at least 500 MPa, preferably at least 1000 MPa, like in the range of 500 to 2500 MPa, preferably in the range of 1000 to 2000 MPa, like 1550 MPa.

The polypropylene homopolymer (PPH-4) is known in the art and commercially available from Borealis AG.

Polypropylene homopolymer (PPH-5):

The at least one polypropylene homopolymer (PPH-5) has a melt flow rate $MFR_2$ (230°C, 2.16 kg, measured according to ISO 1133) in the range of 600 to 1000 g/10 min, preferably of 700 to 900 g/10 min, preferably of 800 g/10 min.

The polypropylene homopolymer (PPH-5) has a melting temperature of at least 140°C; preferably of at least 150°C, preferably in the range of 150 to 160°C, like 158°C.

The polypropylene homopolymer (PPH-5) is known in the art and commercially available from Borealis AG.

Polypropylene homopolymer (PPH-6):

The at least one polypropylene homopolymer (PPH-6) has a melt flow rate $MFR_2$ (230°C, 2.16 kg, measured according to ISO 1133) of $\leq$ 1.5 g/10 min, preferably in the range between 0.15 to 0.5 g/10min, more preferably of 0.3 to 0.45 g/10 min, even more preferably of 0.2 g/ 10 min;

Generally, the high molecular weight linear polypropylene homopolymer (PPH-6) has a weight average molecular weight ($M_w$) of at least 750 kg/mol. Preferably, the high molecular weight linear polypropylene homopolymer (PPH-6) has a weight average molecular weight ($M_w$) in the range of 750 to 2000 kg/mol, more preferably in the range of 800 to 1500 kg/mol.

The polypropylene homopolymer (PPH-6) may have a Charpy Notched Impact Strength (NIS) measured according to ISO 179-1 eA at 23°C in the range of 5-10 kJ/m$^2$, preferably of 7 kJ/m$^2$. The polypropylene homopolymer (PPH-6) may have a tensile modulus measured according to ISO 527-2 of at least 1000 MPa, preferably at least 1500 MPa, more preferably in the range of 1000 to 2000 MPa, like 1650 MPa.

The polypropylene homopolymer (PPH-6) is known in the art and commercially available from Borealis AG.

In the following, more specific embodiments of the present composition are described.

In a first embodiment a polyolefin composition is provided that comprises

a) 40-50 wt% of at least one polypropylene homopolymer (PPH-2) having a melt flow rate $MFR_2$ (230°C, 2.16 kg, measured according to ISO 1133) in the range of range of 10 to 30 g/10min, preferably of 15 to 25 g/10min, more preferably of 20 g/10 min;
b) 25-30 wt% (based on the overall weight of the polyolefin composition) of the mixed plastics polypropylene blend of recycled material;
c) 18-23 wt% (based on the overall weight of the polyolefin composition) of glass fibers;
d) 0.5-1.5 wt% (based on the overall weight of the polyolefin composition) of the at least one coupling agent, and optionally further additives, wherein the sum of all ingredients add always up to 100 wt%,

Such a first polyolefin composition may have

- a melt flow rate $MFR_2$ (230°C, 2.16 kg, measured according to ISO 1133) in the range of 4-10 g/10 min; preferably in the range of 4.5 - 8 g/10 min, more preferably in the range of 5 - 7 g/10 min;
- a tensile modulus (ISO 527-2) of at least 5000 MPa, preferably of at least 5050 MPa,
- a tensile stress at yield at 23°C of at least 80 MPa, preferably of at least 81 MPa.

In a second embodiment a polyolefin composition is provided that comprises

a) 40-50 wt% of least one propylene homopolymer (PPH-6) having a melt flow rate $MFR_2$ (230°C, 2.16 kg, measured according to ISO 1133) of $\leq$ 1.5 g/10 min; preferably in the range of 0.15 and 0.5, more preferably of 0.2 g/10 min;
b) 25-30 wt% (based on the overall weight of the polyolefin composition) of the mixed plastics polypropylene blend of recycled material;
c) 18-23 wt% (based on the overall weight of the polyolefin composition) of glass fibers;
d) 0.5-1.5 wt% (based on the overall weight of the polyolefin composition) of the at least one coupling agent, and optionally further additives, wherein the sum of all ingredients add always up to 100 wt%,

Such a second polyolefin composition may have

- a melt flow rate $MFR_2$ (230°C, 2.16 kg, measured according to ISO 1133) in the range of 4-10 g/10 min; preferably in the range of 4.5 - 8 g/10 min, more preferably in the range of 5 - 7 g/10 min;
- a tensile modulus (ISO 527-2) of at least 5000 MPa, preferably of at least 5100 MPa,
- a tensile stress at yield at 23°C of at least 80 MPa, preferably of at least 84 MPa.

Mixed-plastics polypropylene blend of recycled material

The mixed-plastics polypropylene blend is obtained from recycled waste stream of post-consumer plastic trash.

The process for obtaining the mixed plastics polypropylene blend comprises the following steps:

a) providing post-consumer plastic trash;

b) sorting out goods made from polystyrene, polyamide, polyethylene, metals, paper and wood thereby providing a post-consumer plastic material;

c) sorting out colored goods thereby providing a post-consumer plastic material containing mainly colorless panels, mainly colorless component parts and the like;

d) optionally, further sorting out of old ('ancient') mainly colorless / natural plastic articles recognizable by discoloration (e.g. pronounced yellowing) and/or pronounced scratches of the mainly colorless / natural plastic articles;

e) subjecting the selected post-consumer plastic material being colorless to milling, washing in an aqueous solution with various detergents and subsequent drying, windsifting and screening;

f) subjecting the pretreated post-consumer plastic material to a further sorting for eliminating non-polyolefin and colored parts;

g) extruding the material and yielding the polypropylene blend according to the present invention in the form of pellets;

h) optionally, aeration which is preferably carried out at a temperature in a range of 100-130°C by preheating the post-consumer plastic material to such temperature using an air stream having a temperature of at least 100°C.

Several possible feedstocks from municipal trash collection systems are commercially available and allow providing post-consumer plastic trash. Depending on the participation of the consumer, the purity of those feedstocks will differ which is usually indicated by the collecting systems. It is further possible to screen the intermediate after step b) for the presence of apparently very old ('ancient') mainly colorless / natural plastic articles. Discoloration (e.g. pronounced yellowing) and/or pronounced scratches of the mainly colorless / natural plastic articles allow the sorting. Such step makes it possible to get rid of so-called substances of very high concern. Those substances such as Pb, Hg, polybrominated diphenyl ethers, and the like have been banned for quite some time but are still present in the real world as consumers tend to stockpile plastic articles e.g. in the form of plastic toys for many years and eventually throw them away into collection systems. The additional screen step can be assisted by analysis controls for said substances of very high concern.

Odor control and assessment is possible by a number of methods. An overview is provided inter alia by Demets, Ruben, et al. "Development and application of an analytical method to quantify odour removal in plastic waste recycling processes." Resources, Conservation and Recycling 161 (2020): 104907 being incorporated by reference herewith.

As mentioned previously, in the mixed-plastics polypropylene blend the amounts of the crystalline fraction (CF) and soluble fraction (SF) in CRYSTEX QC analysis are: 91.0 to 94.0 wt.-% crystalline fraction (CF) content and 6.0 to 9.0 wt.-%, soluble fraction (SF) content.

The mixed-plastics polypropylene blend has a CIELAB color space (L*a*b*) of

- L* from 72.0 to 97.0, preferably from 80.0 to 97.0;
- a* from -5.0 to 0.0;
- b* from 0.0 to below 22.0, usually from above 8.0 to below 22.0

The CIELAB color can be influenced by the sorting process. The more yellowish material is accepted, the higher b*.

The mixed-plastics polypropylene blend typically has a melt flow rate (ISO1133, 2.16kg; 230°C) of 2.0 to 50 g/10min. The melt flow rate can be influenced by splitting post-consumer plastic waste streams, for example, but not limited to: originating from extended producer's responsibility schemes, like from the German DSD, or sorted out of municipal solid waste into a high number of pre-sorted fractions and recombine them in an adequate way. As a further way of modifying melt flow rate of the final mixed-plastics polypropylene blend peroxides can be introduced in the final pelletization step. Usually MFR ranges from 2.0 to 50 g/10min, preferably from 2.0 to 30 g/10min, more preferably from 2 to 20 g/10min, and most preferably from 2 to 12 g/10min. This MFR range particularly holds for the non-visbroken mixed-plastics polypropylene blend. Visbreaking allows increase of MFR to 30 g/10 min.

Typically, the recycling nature can be assessed by the presence of one or more of the following substances:

a) polystyrene

b) polyamide-6

c) limonene as determined by using solid phase microextraction (HS-SPME-GC-MS)

d) fatty acids as determined by using solid phase microextraction (HS-SPME-GC-MS).

Presence means detectable limits. The detection limit for limonene and fatty acids in solid phase microextraction (HS-SPME-GC-MS) is below 0.1 ppm, i.e. traces of these substances easily allow figuring out recycling nature.

The following amounts are preferred

a) polystyrene: 0 to 2.0 wt%; more prefered 0 to 0.5 wt%

b) polyamide-6: 0 to 1.5 wt%; more preferred 0 to 0.5 wt%

c) limonene as determined by using solid phase microextraction (HS-SPME-GC-MS): 0.1 ppm to 50 ppm

d) fatty acids as determined by using solid phase microextraction (HS-SPME-GC-MS): 0.1 ppm to 200 ppm, more preferably 50 ppm.

It goes without saying that the amounts of a), b), c) and d) should be as low as possible. In a specifically preferred embodiment the mixed-plastics polypropylene blend is free of polystyrene and is free of polyamide meaning both polymers are below the detection limit.

The mixed-plastics polypropylene blend preferably has a soluble fraction (SF) obtained by CRYSTEX QC analysis with a content of ethylene (C2(SF)), as determined by FT-IR spectroscopy calibrated by quantitative $^{13}$C-NMR spectroscopy, in the range from 10.0 to 25.0 wt%, more preferably 12.0 to 25.0 wt%, even more preferably 12.0 to 20.0 wt% and most preferably 14.0 to 19.0 wt%.

The mixed-plastics polypropylene blend is preferably characterized by an odor (VDA270-B3) of 4.0 or lower, preferably 3.0 or lower. It should be understood that many commercial recycling grades which do not report odor are in fact even worse as an odor test under VDA270 is forbidden due to the presence of problematic substances.

In a further aspect the mixed-plastics polypropylene blend has a Large Amplitude Oscillatory Shear - Non-Linear Factor (LAOS -NLF) (190°C; 1000%) higher than 2.3, whereby

$$LAOS - NLF = \left|\frac{G_1'}{G_3'}\right|$$

whereby

$G_1$' is the first order Fourier Coefficient

$G_3$' is the third order Fourier Coeffient

Without wishing to being bound by theory, it is believed that the processing of the polymer contributes to branching triggered by enclosed contaminants. The LAOS-NLF may be influenced by selecting feedstock such that about 10 wt% of the material is soft polypropylene. It should be understood that several regions operate collection stations collecting highly consumer pre-sorted plastics. Such highly valuable plastics streams are commercially available and allow upgrading of other low quality streams (such as by a softer polypropylene mixture) from other waste disposal resources. The second embodiment having higher amount of crystalline fraction (CF), i.e. 91.0 to 94.0 wt% crystalline fraction (CF) content and 6.0 to 9.0 wt%, soluble fraction (SF) content, is more limited, whereby the Large Amplitude Oscillatory Shear - Non-Linear Factor (LAOS -NLF) (190°C; 1000%) is somewhat lower.

The mixed-plastics polypropylene blend has a tensile modulus (ISO 527-2 at a cross head speed of 1 mm/min; 23°C) using injection molded specimens as described in EN ISO 1873-2 (dog bone shape, 4 mm thickness) of at least 1200 MPa, preferably at least 1250 MPa. Usually the tensile modulus (ISO 527-2 at a cross head speed of 1 mm/min; 23°C) of the second embodiment will not be higher than 1400 MPa.

The mixed-plastics polypropylene blend turned out to have excellent processability reflected by a shear thinning factor (STF) being the ratio of eta 0.05 and eta 300 of above 13.0.

The Charpy notched impact strength (non-instrumented, ISO 179-1 at +23 °C) of the mixed-plastics polypropylene blend is preferably higher than 6.0 kJ/m[2], more preferably higher than 8.0 kJ/m[2], most preferably higher than 8.3 kJ/m[2].

In a specifically preferred embodiment, the mixed-plastics polypropylene blend according to present invention has a notched Charpy impact strength (NIS) (1eA) (non-instrumented, ISO 179-1 at +23 °C) according to ISO 179-1 eA at +23 °C on injection moulded specimens of 80 x 10 x 4 mm prepared according to EN ISO 1873-2 of at least 8.0 kJ/m[2], preferably 8.3 kJ/m[2], whereby further said soluble fraction (SF) obtained by CRYSTEX QC analysis has an ethylene content (C2(SF)), as determined by FT-IR spectroscopy calibrated by quantitative $^{13}$C-NMR spectroscopy, in the range from 12.0 to 20.0 wt.-% and further preferably the mixed-plastics polypropylene blend has a CIELAB color space (L*a*b) of

- L* from 72.0 to 97.0, preferably from 80.0 to 97.0;
- a* from -5.0 to 0.0;

- b* from 0.0 to below 22.0

In this specifically preferred aspect, the crystalline fraction (CF) content determined according to CRYSTEX QC analysis is preferably in the range from 91.0 to 94.0 wt.-% and the soluble fraction (SF) content determined according to CRYSTEX QC analysis is preferably in the range of 6.0 to 9.0 wt.-%.

In an embodiment, the mixed-plastics polypropylene blend is visbroken by one or more peroxides. The mixed-plastics polypropylene blend can be subjected to visbreaking as any other virginpolyproyplene blend. If the mixed-plastics polypropylene blend according to the present invention has been subjected to visbreaking, the decomposition products of the visbreaking process can be found in the resulting blend. It should be understood that decomposition products of visbreaking process (as commonly used in the art for virgin materials) are not considered as impurities.

As mentioned above, the mixed-plastics polypropylene blend has inorganic residues as measured by calcination analysis (TGA) according to DIN ISO 1172:1996 of 0.05 to 3.0 wt%, preferably 0.05 to 2.5 wt%, optionally 1.0 to 2.5 wt% with respect to the mixed-plastics polypropylene blend.

Furthermore, the mixed-plastics polypropylene blend does not contain benzene above the detection limit of HS GC-MS 80°C/2h.

Glass fibers / coupling agent / Additives

As mentioned above, the polyolefin composition according to the invention comprises glass fibers, in particular short glass fibers. The glass fibers used in the polyolefin composition according to the invention preferably have an average fiber length in the range of from 2.0 to 10.0 mm, preferably in the range of 2.0 to 8.0 mm, even more preferably in the range of 2.0 to 6.0 mm, still more preferably in the range of 3.0 to 5.5 mm, even more preferably of 3.5 - 5.0 mm.

It is further preferred that the short glass fibers used in the fiber reinforced composite preferably have an average diameter of from 5 to 20 $\mu$m, more preferably from 8 to 18 $\mu$m, still more preferably 8 to 15 $\mu$m, even more preferably 10-15 $\mu$m, preferably of 11-14 $\mu$m, preferably 12-14 $\mu$m, more preferably of 12.3-13.7 $\mu$m, even more preferably of 12.5-13.5 $\mu$m.

In one preferred embodiment glass fibers are used which have a fiber length of 3.0 - 5.0 mm (average 4.0 mm), and a fiber diameter of 12.3 - 13.7 $\mu$m (average 13 $\mu$m). In another preferred embodiment glass fibers are used which have a fiber length of 3.5 - 5.5 mm (average 4.5 mm), and a fiber diameter of 12 - 14 $\mu$m (average 13 $\mu$m).

As also mentioned above, the polyolefin composition according to the invention comprises at least one coupling agent. The at least one coupling agent is a functionalized polypropylene, in particular a polypropylene functionalized with maleic anhydride (MAH). The amount of coupling agent in the polyolefin composition may be 1-2 wt%, such as 1 wt% or 1.25 wt%.

In one embodiment the polyolefin composition may comprise at least one dosing agent for accepting fillers/pigments during extrusion. The at least one coupling agent may be a polypropylene homopolymer with melt flow rates $MFR_2$ between 1 and 5 g/10 min, preferably between 2 and 3 g/10 min and a density between 800 and 100 kg/m$^3$, preferably between 900 and 950 kg/m$^3$. Such a polymer is commercially available from Borealis AG. The amount of dosing agent in the polyolefin composition may be 1-2 wt%, such as 1.2-1.4 wt%.

In a further embodiment the polyolefin composition may comprise further additives. Examples of additives for use in the composition are pigments or dyes (for example carbon black), stabilizers (anti-oxidant agents), anti-acids and/or anti-UVs, antistatic agents, nucleating agents and utilization agents (such as processing aid agents). Preferred additives are carbon black, at least one antioxidant and/or at least one UV stabilizer.

Generally, the amount of these additives is in the range of 0 to 5.0 wt%, preferably in the range of 0.01 to 3.0 wt%, more preferably from 0.01 to 2.0 wt% based on the weight of the total composition.

Examples of antioxidants which are commonly used in the art, are sterically hindered phenols (such as CAS No. 6683-19-8, also sold as Irganox 1010 FF™ by BASF), phosphorous based antioxidants (such as CAS No. 31570-04-4, also sold as Hostanox PAR 24 (FF)™ by Clariant, or Irgafos 168 (FF)TM by BASF), sulphur based antioxidants (such as CAS No. 693- 36-7, sold as Irganox PS-802 FL™ by BASF), nitrogen-based antioxidants (such as 4,4'- bis(1,1'-dimethylbenzyl)diphenylamine), or antioxidant blends. Preferred antioxidants may be Tris (2,4-di-t-butylphenyl) phosphite and/or Octadecyl 3-(3',5'-di-tert. butyl-4-hydroxyphenyl)propionate. Anti-acids are also commonly known in the art. Examples are calcium stearates, sodium stearates, zinc stearates, magnesium and zinc oxides, synthetic hydrotalcite (e.g. SHT, CAS-No. 11097-59-9), lactates and lactylates, as well as calcium stearate (CAS No. 1592-23-0) and zinc stearate (CAS No. 557-05-1).

Common antiblocking agents are natural silica such as diatomaceous earth (such as CAS No. 60676-86-0 (SuperfFloss™), CAS-No. 60676-86-0 (SuperFloss E™), or CAS-No. 60676-86-0 (Celite 499™)), synthetic silica (such as CAS-No. 7631-86-9, CAS-No. 7631-86-9, CAS-No. 7631-86-9, CAS-No. 7631-86-9, CAS-No. 7631-86-9, CAS-No. 7631-86-9, CAS-No. 112926-00-8, CAS-No. 7631-86-9, or CAS-No. 7631-86-9), silicates (such as aluminium silicate (Kaolin) CAS-no. 1318-74-7, sodium aluminum silicate CAS-No. 1344-00-9, calcined kaolin CAS-No. 92704-41-1, aluminum silicate CAS-No. 1327-36-2, or calcium silicate CAS-No. 1344-95-2), synthetic zeolites (such as sodium calcium aluminosilicate hydrate CAS-No. 1344-01-0, CAS-No. 1344-01-0, or sodium calcium aluminosilicate, hydrate CAS-No. 1344-01-0).

Anti-UVs are, for example, Bis-(2,2,6,6-tetramethyl-4-piperidyl)-sebacate (CAS -No. 52829-07-9, Tinuvin 770); 2-hydroxy-4-n-octoxy-benzophenone (CAS-No. 1843-05-6, Chimassorb 81). Preferred UV stabilizers may be low and/or high molecular weight UV stabilizers such as n-Hexadecyl- 3,5-di-t-butyl-4-hydroxybenzoate, A mixture of esters of 2,2,6,6-tetramethyl-4-piperidinol and higher fatty acids (mainly stearic acid) and/or Poly((6-morpholino-s-triazine-2,4-diyl) (1,2,2,6,6-pentamethyl-4-piperidyl)imino)hexameth-ylene (1,2,2,6,6-pentamethyl-4-piperidyl)imino)).

Alpha nucleating agents like sodium benzoate (CAS No. 532-32-1); 1,3:2,4-bis(3,4-dimethylbenzylidene) sorbitol (CAS 135861-56-2, Millad 3988). Suitable antistatic agents are, for example, glycerol esters (CAS No. 97593-29-8) or ethoxylated amines (CAS No. 71786-60-2 or 61791-31-9) or ethoxylated amides (CAS No. 204-393-1). Usually these additives are added in quantities of 100-2.000 ppm for each individual component of the polymer.

It is appreciated that the present invention also refers to a process for producing the polyolefin compositions as defined herein. The process comprises the steps of

- providing a mixture of the at least one polypropylene homopolymer; the mixed-plastics polypropylene blend of recycled material, glass fibers and the at least one coupling agent in the required amounts;
- melting the mixture in an extruder, and
- optionally pelletizing the obtained polyolefin composition.

For the purposes of the present invention, any suitable melting and mixing means known in the art may be used for carrying out the mixing and melting.

However, the melting and mixing step preferably takes place in a mixer and/or blender, high or low shear mixer, high-speed blender, or a twin-screw extruder. Most preferably, the melting and mixing step takes place in a twin-screw extruder such as a co-rotating twin-screw extruder. Such twin-screw extruders are well known in the art and the skilled person will adapt the melting and mixing conditions (such as melting temperature, screw speed and the like) according to the process equipment.

The polyolefin composition according to the invention can be used for a wide range of applications, for example in the manufacture of structural products, appliances, automotive articles, pipes, films, geo-membranes, roofing applications, pond liners, packaging, caps and closures. Additionally, due to the satisfactory tensile properties of the compositions of the present invention, they may be employed as films (with a thickness of 400 microns or less) or for flexible foils (with a thickness of more than 400 microns) such as geo-membranes for agriculture, roofing applications and as pond liners. Typically, the compositions described herein are used as core layer(s) of a multilayer sheet or film (e.g. a three layer geo-membrane sheet), where the external layers are made of various kinds of polyolefin materials.

**Test Methods**

**a) CRYSTEX**

**Determination of Crystalline and soluble fractions and their respective properties (IV and Ethylene content)**

The crystalline (CF) and soluble fractions (SF) of the polypropylene (PP) compositions as well as the comonomer content and intrinsic viscosities of the respective fractions were analyzed by use of the CRYSTEX instrument, Polymer Char (Valencia, Spain). Details of the technique and the method can be found in literature (Ljiljana Jeremic, Andreas Albrecht, Martina Sandholzer & Markus Gahleitner (2020) Rapid characterization of high-impact ethylene-propylene copolymer composition by crystallization extraction separation: comparability to standard separation methods, International Journal of Polymer Analysis and Characterization, 25:8, 581-596).

The crystalline and amorphous fractions are separated through temperature cycles of dissolution at 160°C, crystallization at 40°C and re-dissolution in 1,2,4-trichlorobenzene at 160°C. Quantification of SF and CF and determination of ethylene content (C2) are achieved by means of an integrated infrared detector (IR4) and for the determination of the intrinsic viscosity (IV) an online 2-capillary viscometer is used.

The IR4 detector is a multiple wavelength detector measuring IR absorbance at two different bands (CH3 stretching vibration (centred at app. 2960 $cm^{-1}$) and the CH stretching vibration (2700-3000 $cm^{-1}$) that are serving for the determination of the concentration and the Ethylene content in Ethylene-Propylene copolymers. The IR4 detector is calibrated with series of 8 EP copolymers with known Ethylene content in the range of 2 wt.-% to 69 wt.-% (determined by 13C-NMR) and each at various concentrations, in the range of 2 and 13mg/ml. To encounter for both features, concentration and ethylene content at the same time for various polymer concentrations expected during Crystex analyses the following calibration equations were applied:

$$Conc = a + b*Abs(CH) + c*(Abs(CH))^2 + d*Abs(CH_3) + e*(Abs(CH_3)^2 + f*Abs(CH)*Abs(CH_3)$$

(Equation 1)

$$CH_3/1000C = a + b*Abs(CH) + c* Abs(CH_3) + d * (Abs(CH_3)/Abs(CH)) + e * (Abs(CH_3)/Abs(CH))^2 \qquad \text{(Equation 2)}$$

The constants a to e for equation 1 and a to f for equation 2 were determined by using least square regression analysis.

The $CH_3/1000C$ is converted to the ethylene content in wt.-% using following relationship:

$$\text{Wt.-\% (Ethylene in EP Copolymers)} = 100 - CH_3/1000TC * 0.3 \qquad \text{(Equation 3)}$$

Amounts of Soluble Fraction (SF) and Crystalline Fraction (CF) are correlated through the XS calibration to the "Xylene Cold Soluble" (XCS) quantity and respectively Xylene Cold Insoluble (XCI) fractions, determined according to standard gravimetric method as per ISO16152. XS calibration is achieved by testing various EP copolymers with XS content in the range 2-31 Wt%. The determined XS calibration is linear:

$$\text{Wt.-\% XS} = 1,01* \text{Wt.-\% SF} \qquad \text{(Equation 4)}$$

Intrinsic viscosity (IV) of the parent EP copolymer and its soluble and crystalline fractions are determined with a use of an online 2-capillary viscometer and are correlated to corresponding IV's determined by standard method in decalin according to ISO 1628-3. Calibration is achieved with various EP PP copolymers with IV = 2-4 dL/g. The determined calibration curve is linear:

$$\text{IV (dL/g)} = a* Vsp/c \text{ (equation 5)}$$

The samples to be analyzed are weighed out in concentrations of 10mg/ml to 20mg/ml. To avoid injecting possible gels and/or polymers, which do not dissolve in TCB at 160°C, like PET and PA, the weighed out sample was packed into a stainless steel mesh MW 0,077/D 0,05mmm.

After automated filling of the vial with 1,2,4-TCB containing 250 mg/l 2,6-tert-butyl-4-methylphenol (BHT) as antioxidant, the sample is dissolved at 160°C until complete dissolution is achieved, usually for 60 min, with constant stirring of 400rpm. To avoid sample degradation, the polymer solution is blanketed with the N2 atmosphere during dissolution.

A defined volume of the sample solution is injected into the column filled with inert support where the crystallization of the sample and separation of the soluble fraction from the crystalline part is taking place. This process is repeated two times. During the first injection the whole sample is measured at high temperature, determining the IV[dl/g] and the C2[wt%] of the PP composition. During the second injection, the soluble fraction (at low temperature) and the crystalline fraction (at high temperature) with the crystallization cycle are measured (Wt% SF, Wt% C2, IV).

**b) Quantification of microstructure by NMR spectroscopy (calibration only)**

Quantitative nuclear-magnetic resonance (NMR) spectroscopy was used for calibration.

Quantitative 13C{1H} NMR spectra were recorded in the solution-state using a Bruker Avance Neo 400 NMR spectrometer operating at 400.15 and 100.62 MHz for 1H and 13C respectively. All spectra were recorded using a 13C optimized 10 mm extended temperature probe head at 125°C using nitrogen gas for all pneumatics. Approximately 200 mg of material was dissolved in approximately 3 ml of 1,2-tetrachloroethane-d2 (TCE-d2) along with approximately 3 mg BHT (2,6-di-tert-butyl-4-methylphenol CAS 128-37-0) and chromium-(III)-acetylacetonate (Cr(acac)3) resulting in a 60 mM solution of relaxation agent in solvent as described in G. Singh, A. Kothari, V. Gupta, Polymer Testing 2009, 28(5), 475.

To ensure a homogenous solution, after initial sample preparation in a heat block, the NMR tube was further heated in a rotatory oven for at least 1 hour. Upon insertion into the magnet the tube was spun at 10 Hz. This setup was chosen primarily for the high resolution and quantitatively needed for accurate ethylene content quantification. Standard single-pulse excitation was employed without NOE, using an optimised tip angle, 1 s recycle delay and a bi-level WALTZ16 decoupling scheme as described in Z. Zhou, R. Kuemmerle, X. Qiu, D. Redwine, R. Cong, A. Taha, D. Baugh, B. Winniford, J. Mag. Reson. 187 (2007) 225 and V. Busico, P. Carbonniere, R. Cipullo, C. Pellecchia, J. Severn, G. Talarico, Macromol. Rapid Commun. 2007, 28, 1128. A total of 6144 (6k) transients were acquired per spectra.

Quantitative 13C{1H} NMR spectra were processed, integrated and relevant quantitative properties determined from the integrals. All chemical shifts were indirectly referenced to the central methylene group of the ethylene block (EEE) at 30.00 ppm using the chemical shift of the solvent. This approach allowed comparable referencing even when this structural unit was not present.

Characteristic signals corresponding to the incorporation of ethylene were observed (as described in Cheng, H. N., Macromolecules 1984, 17, 1950) and the comonomer fraction calculated as the fraction of ethylene in the polymer with respect to all monomer in the polymer:

$$fE = ( E / ( P + E )$$

The comonomer fraction was quantified using the method of W-J. Wang and S. Zhu, Macromolecules 2000, 33 1157, through integration of multiple signals across the whole spectral region in the 13C{1H} spectra. Integral regions were slightly adjusted to increase applicability across the whole range of encountered comonomer contents.

The mole percent comonomer incorporation was calculated from the mole fraction:

$$E\ [mol\%] = 100 * fE$$

The weight percent comonomer incorporation was calculated from the mole fraction:

$$E\ [wt\%] = 100 * ( fE * 28.06 ) / ( (fE * 28.06) + ((1\text{-}fE) * 42.08) ).$$

**c) Tensile modulus and tensile strain at yield / break** were measured according to ISO 527-2 (cross head speed = 1 mm/min; test speed 50 mm/min at 23 °C) using injection molded specimens as described in EN ISO 1873-2 (dog bone shape, 4 mm thickness). The measurement is done after 96 h conditioning time of the specimen.

**d) Impact strength** was determined as notched Charpy impact strength (1eA) (non-instrumented, ISO 179-1 at +23 °C) according to ISO 179-1 eA at +23 °C on injection moulded specimens of 80 x 10 x 4 mm prepared according to EN ISO 1873-2.

**e) Inorganic residues:** TGA according to DIN ISO 1172:1996 using a Perkin Elmer TGA 8000. Approximately 10-20 mg of material was placed in a platinum pan. The temperature was equilibrated at 50°C for 10 minutes, and afterwards raised to 950°C under nitrogen at a heating rate of 20 °C/min. The ash content was evaluated as the weight % at 850°C.

**f) MFR:** melt flow rates were measured with a load of 2.16 kg ($MFR_2$) at 230 °C. The melt flow rate is that quantity of polymer in grams, which the test apparatus standardized to ISO 1133 extrudes within 10 minutes at a temperature of 230 °C under a load of 2.16 kg.

**g) Amount of Metals**
determined by x ray fluorescence (XRF).

**h) Amount of Paper, Wood (for control purposes only)**
paper and wood can be determined by conventional laboratory methods including milling, floatation, microscopy and Thermogravimetric Analysis (TGA).

**i) Benzene content**
by **HS GC-MS 80°C/2h,** which is described as the following

**Static headspace analysis**

The parameters of the applied static headspace gas chromatography mass spectrometry (HS/GC/MS) method are described here.

4.000 ± 0.100 g sample were weighed in a 20 ml HS vial and tightly sealed with a PTFE cap.

The mass spectrometer was operated in scan mode and a total ion chromatogram (TIC) was recorded for each analysis. More detailed information on applicable method parameters and data evaluation are given below:
- HS parameter (Agilent G1888 Headspace Sampler)
Vial equilibration time: 120 min

| | |
|---|---|
| Oven temperature: | 80 °C |
| Loop temperature: | 205 °C |
| Transfer line temperature: | 210 °C |
| Low shaking | |

- GC parameter (Agilent 7890A GC System)

| | |
|---|---|
| Column: | ZB-WAX 7HG-G007-22 (30 m x 250 $\mu$m x 1 $\mu$m) |
| Carrier gas: | Helium 5.0 |
| Flow: | 2 ml/min |
| Split: | 5:1 |
| GC oven progra m: | 35 °C for 0.1 min |

| | |
|---|---|
| 10 °C/min | until 250 °C |
| 250 °C | for 1 min |

- MS parameter (Agilent 5975C inert XL MSD)

| | |
|---|---|
| Acquisition mode: | Scan |
| Scan parameters: | |
| Low mass: | 20 |
| High mass: | 200 |
| Threshold: | 10 |

- Software/Data evaluation

MSD ChemStation E.02.02.1431
MassHunter GC/MS Acquisition B.07.05.2479
AMDIS GC/MS Analysis Version 2.71
NIST Mass Spectral Library Version 2.0 g

- AMDIS deconvolution parameters

| | |
|---|---|
| Minimum match factor: | 80 |
| Threshold: | Low |
| Scan direction: | High to Low |
| Data file format: | Agilent files |
| Instrument type: | Quadrupole |
| Component width: | 20 |
| Adjacent peak subtraction: | Two |
| Resolution: | High |
| Sensitivity: | Very high |
| Shape requirements: | Medium |
| Solvent tailing: | 44 m/z |
| Column bleed: | 207 m/z |
| Min. model peaks: | 2 |
| Min. S/N: | 10 |
| Min. certain peaks: | 0.5 |

Data evaluation

The TIC data were further deconvoluted with the aid of AMDIS software (see parameters stated above) and compared to a custom target library which was based on the mass spectral library (NIST). In the custom target library, the respective mass spectra of selected substances (e.g. benzene) were included. Only when the recognised peak showed a minimum match factor of 80 and an experienced mass spectroscopist confirmed the match, a substance was accepted as "tentatively identified".

In this study, the statement "below the limit of detection (< LOD)" referred to a condition where either the match factor was below 80 (AMDIS) or the peak as such was not even recognised. The results refer solely to the measured samples, time of measurement and the applied parameters.

**j) CIELAB color space (L\*a\*b\*)**

In the CIE L\*a\*b\* uniform color space, measured according to DIN EN ISO 11664-4, the color coordinates are: L\*-the lightness coordinate; a\*-the red/green coordinate, with +a\* indicating red, and -a\* indicating green; and b\*-the yellow/blue coordinate, with +b\* indicating yellow, and -b\* indicating blue. The L\*, a\*, and b\*coordinate axis define the three dimensional CIE color space. Standard Konica/Minolta Colorimeter CM-3700A.

**k) Odor VDA270-B3**

VDA 270 is a determination of the odor characteristics of trim-materials in motor vehicles. In this study, the odor is determined following VDA 270 (2018) variant B3.. The odor of the respective sample is evaluated by each assessor according to the VDA 270 scale after lifting the jar's lid as little as possible. The hexamerous scale consists of the following grades: Grade 1: not perceptible, Grade 2: perceptible, not disturbing, Grade 3: clearly perceptible, but not disturbing, Grade 4: disturbing, Grade 5: strongly disturbing, Grade 6: not acceptable. Assessors stay calm during the assessment and are not allowed to bias each other by discussing individual results during the test. They are not allowed to adjust their assessment after testing another sample, either. For statistical reasons (and as accepted by the VDA 270) assessors are forced to use whole steps in their evaluation. Consequently, the odor grade is based on the average mean of all individual assessments, and rounded to whole numbers.

**l) Limonene detection**

Limonene quantification can be carried out using solid phase microextraction (HS-SPME-GC-MS) by standard addition.
50 mg ground samples are weighed into 20 mL headspace vials and after the addition of limonene in different concentrations and a glass-coated magnetic stir bar, the vial is closed with a magnetic cap lined with silicone/PTFE. Micro capillaries (10 pL) are used to add diluted limonene standards of known concentrations to the sample. Addition of 0, 2, 20 and 100 ng equals 0 mg/kg, 0.1 mg/kg, 1mg/kg and 5 mg/kg limonene, in addition standard amounts of 6.6 mg/kg, 11 mg/kg and 16.5 mg/kg limonene is used in combination with some of the samples tested in this application. For quantification, ion-93 acquired in SIM mode is used. Enrichment of the volatile fraction is carried out by headspace solid phase microextraction with a 2 cm stable flex 50/30 pm DVB/Carboxen/PDMS fibre at 60°C for 20 minutes. Desorption is carried out directly in the heated injection port of a GCMS system at 270°C.

GCMS Parameters:

Column: 30 m HP 5 MS 0.25\*0.25
Injector: Splitless with 0.75 mm SPME Liner, 270°C
Temperature program: -10°C (1 min)
Carrier gas: Helium 5.0, 31 cm/s linear velocity, constant flow
MS: Single quadrupole, direct interface, 280°C interface temperature
Acquisition: SIM scan mode
Scan parameter: 20-300 amu
SIM Parameter: m/Z 93, 100 ms dwell time

**m) Fatty acid detection**

Fatty acid quantification is carried out using headspace solid phase micro-extraction (HS-SPME-GC-MS) by standard addition.
50 mg ground samples are weighed in 20 mL headspace vial and after the addition of limonene in different concentrations and a glass coated magnetic stir bar the vial is closed with a magnetic cap lined with silicone/PTFE. 10 $\mu$L Micro-capillaries are used to add diluted free fatty acid mix (acetic acid, propionic acid, butyric acid, pentanoic acid, hexanoic acid and octanoic acid) standards of known concentrations to the sample at three different levels. Addition of 0, 50, 100 and 500 ng equals 0 mg/kg, 1 mg/kg, 2 mg/kg and 10 mg/kg of each individual acid. For quantification ion 60 acquired in SIM mode is used for all acids except propanoic acid, here ion 74 is used.

GCMS Parameter:

Column: 20 m ZB Wax plus 0.25*0.25
Injector: Split 5:1 with glass lined split liner, 250°C
Temperature program: 40°C (1 min) @6°C/min to 120°C, @15°C to 245 °C (5 min)
Carrier: Helium 5.0, 40 cm/s linear velocity, constant flow
MS: Single quadrupole, direct interface, 220°C inter face temperature
Acquisition: SIM scan mode
Scan parameter: 46-250 amu 6.6 scans/s
SIM Parameter: m/z 60, 74, 6.6 scans/s

**n) Presence of polyamide-6 and polystyrene**

By FTIR spectroscopy using the absorption of the band at 1601 $cm^{-1}$ (PS) and 3300 $cm^{-1}$ (PA6).

**o) Determination of contaminations on the plaques**

The plaques are injection-moulded, 150x80x2mm dimension. Then, a high-resolution image (photograph) is taken on the 5 plaques (putting them close to each other). The image is then analyzed by a software allowing an automatic counting of the number of visual defects (by naked-eyes) due to contaminations.

**p) Dynamic Shear Measurements (Eta(2.7kPa) and Eta(300rad/s))**

The characterisation of polymer melts by dynamic shear measurements complies with ISO standards 6721-1 and 6721-10. The measurements were performed on an Anton Paar MCR501 stress controlled rotational rheometer, equipped with a 25 mm parallel plate geometry. Measurements were undertaken on compression-moulded plates, using nitrogen atmosphere and setting a strain within the linear viscoelastic regime. The oscillatory shear tests were done at 230°C applying a frequency range between 0.01 and 600 rad/s and setting a gap of 1.3 mm.
In a dynamic shear experiment the probe is subjected to a homogeneous deformation at a sinusoidal varying shear strain or shear stress (strain and stress controlled mode, respectively). On a controlled strain experiment, the probe is subjected to a sinusoidal strain that can be expressed by

$$\gamma(t) = \gamma_0 \sin(\omega t) \qquad (1)$$

If the applied strain is within the linear viscoelastic regime, the resulting sinusoidal stress response can be given by

$$\sigma(t) = \sigma_0 \sin(\omega t + \delta) \qquad (2)$$

where

$\sigma_0$ and $\gamma_0$ are the stress and strain amplitudes, respectively
$\omega$ frequency is the angular
$\delta$ is the phase shift (loss angle between applied strain and stress response)
t is the time

Dynamic test results are typically expressed by means of several different rheological functions, namely the shear storage modulus G', the shear loss modulus, G", the complex shear modulus, G*, the complex shear viscosity, $\eta^*$, the dynamic shear viscosity, $\eta'$, the out-of-phase component of the complex shear viscosity $\eta''$ and the loss tangent, tan $\delta$ which can be expressed as follows:

$$G' = \frac{\sigma_0}{\gamma_0} \cos\delta \ [Pa] \qquad (3)$$

$$G' = \frac{\sigma_0}{\gamma_0} \sin\delta \ [\text{Pa}] \qquad\qquad (4)$$

$$G^* = G' + iG'' \ [\text{Pa}] \qquad\qquad (5)$$

$$\eta^* = \eta' - i\eta'' \ [\text{Pa.s}] \qquad\qquad (6)$$

$$\eta' = \frac{G''}{\omega} \ [\text{Pa.s}] \qquad\qquad (7)$$

$$\eta'' = \frac{G'}{\omega} \ [\text{Pa.s}] \qquad\qquad (8)$$

ETA(x kPa) is determined according with equation 9.

$$ETA(x \ kPa) = Eta^* \ \ for \ \ (G^* = x \ kPa) \ [\text{Pa.s}] \qquad\qquad (9)$$

For example, the ETA(2.7 kPa) is the defined by the value of the complex viscosity, determined for a value of complex modulus equal to 2.7 kPa.

Eta (x rad/s) is determined according with equation 10.

$$ETA(x \ rad/s) = Eta^* \ \ for \ \ (\omega = x \ rad/s) \ [\text{Pa.s}] \qquad\qquad (10)$$

For example, the ETA(300 rad/s) is defined by the value of the complex viscosity, determined at a frequency sweep of 300 rad/s.

**q) Shear Thinning Factor (STF) is defined as**

$$STF = \frac{Eta^* \ \text{for} \ (\omega = 0.05 \ \text{rad/s})}{Eta^* \ \text{for} \ (\omega = 300 \ \text{rad/s})} \qquad\qquad (11)$$

The values are determined by means of a single point interpolation procedure, as defined by Rheoplus software. In situations for which a given G* value is not experimentally reached, the value is determined by means of an extrapolation, using the same procedure as before. In both cases (interpolation or extrapolation), the option from Rheoplus *"- Interpolate y-values to x-values from parameter"* and the *"logarithmic interpolation type"* were applied ([1] Rheological characterization of polyethylene fractions" Heino, E.L., Lehtinen, A., Tanner J., Seppälä, J., Neste Oy, Porvoo, Finland, Theor. Appl. Rheol., Proc. Int. Congr. Rheol, 11th (1992), 1, 360-362; [2] The influence of molecular structure on some rheological properties of polyethylene", Heino, E.L., Borealis Polymers Oy, Porvoo, Finland, Annual Transactions of the Nordic Rheology Society, 1995.) [3] Definition of terms relating to the non-ultimate mechanical properties of polymers, Pure & Appl. Chem., Vol. 70, No. 3, pp. 701-754, 1998.)

**r) LARGE AMPLITUDE OSCILLATORY SHEAR (LAOS)**

The investigation of the non-linear viscoelastic behavior under shear flow was done resorting to Large Amplitude Oscillatory Shear. The method requires the application of a sinusoidal strain amplitude, $\gamma_0$, imposed at a given angular frequency, $\omega$, for a given time, t. Provided that the applied sinusoidal strain is high enough, a non-linear response is generated. The stress, $\sigma$ is in this case a function of the applied strain amplitude, time and the angular frequency. Under these conditions, the non-linear stress response is still a periodic function; however, it can no longer be expressed by a single harmonic sinusoid. The stress resulting from a non-linear viscoelastic response [0-0] can be expressed by a Fourier series, which includes the higher harmonics contributions:

$$\sigma(t, \omega, \gamma_0) = \gamma_0 \cdot \sum_n [G'_n(\omega, \gamma_0) \cdot \sin(n\omega t) + G''_n(\omega, \gamma_0) \cdot \cos(n\omega t)] \qquad (1)$$

with,

σ - stress response

t - time

ω- frequency

$\gamma_0$ - strain amplitude

n- harmonic number

$G'_n$- n order elastic Fourier coefficient

$G''_n$- n order viscous Fourier coefficient

The non-linear viscoelastic response was analysed applying Large Amplitude Oscillatory Shear (LAOS). Time sweep measurements were undertaken on an RPA 2000 rheometer from Alpha Technologies coupled with a standard biconical die. During the course of the measurement the test chamber is sealed and a pressure of about 6 MPa is applied. The LAOS test is done applying a temperature of 190 °C, an angular frequency of 0.628 rad/s and a strain of 1000 %. In order to ensure that steady state conditions are reached, the non-linear response is only determined after at least 20 cycles per measurement are completed. The Large Amplitude Oscillatory Shear Non-Linear Factor (LAOS_NLF) is defined by:

$$LAOS_{NLF}(190°C, 1000\%) = \left| \frac{G'_1}{G'_3} \right| \qquad (2)$$

where

$G'_1$ - first order Fourier Coefficient

$G'_3$ - third order Fourier Coefficient

(J. M. Dealy, K. F. Wissbrun, Melt Rheology and Its Role in Plastics Processing: Theory and Applications; edited by Van Nostrand Reinhold, New York (1990); S. Filipe, Non-Linear Rheology of Polymer Melts, AIP Conference Proceedings 1152, pp. 168-174 (2009); M. Wilhelm, Macromol. Mat. Eng. 287, 83-105 (2002); S. Filipe, K. Hofstadler, K. Klimke, A. T. Tran, Non-Linear Rheological Parameters for Characterisation of Molecular Structural Properties in Polyolefins, Proceedings of Annual European Rheology Conference, 135 (2010); S. Filipe, K. Klimke, A. T. Tran, J. Reussner, Proceedings of Novel Non-Linear Rheological Parameters for Molecular Structural Characterisation of Polyolefins, Novel Trends in Rheology IV, Zlin, Check Republik (2011); K. Klimke, S. Filipe, A. T. Tran, Non-linear rheological parameters for characterization of molecular structural properties in polyolefins, Proceedings of European Polymer Conference, Granada, Spain (2011)).

In Table 1 several examples (comparative-CE; inventive-IE) are summarized.

Different blends of recycled material were used. The blends are characterized by the following properties:
Blend A1: C2 (CF) content 2-3 wt%, C2 (SF) content 17-18 wt%, C3 (CF) content 97-98 wt%, $MFR_2$ 7-8 g/ 10 min, tensile modulus 1250 - 1300 MPa, Impact strength (charpy test 23°C) 8-9 KJ/m²

Blend A1 was obtained in the process for obtaining mixed plastics polypropylene as described previously including the step of further sorting out of old ('ancient') mainly colorless / natural plastic articles recognizable by discoloration (e.g. pronounced yellowing) and/or pronounced scratches of the mainly colorless / natural plastic article.

Blend A2 for comparative examples: total C2 content 10-15 wt%, C2 (CF) content 8-12 wt%, C2 (SF) content 29-32 wt%, $MFR_2$ 12 - 14 g/ 10 min, tensile modulus 1200 - 1300 MPa, Impact strength (charpy test 23°C) 5-6 KJ/m²;

Table 1 refers to polyolefin compositions comprising:

- Comparative Example (CE1): one first polypropylene homopolymer (PPH-1, $MFR_2$ of 20 g/10 min) and a second polypropylene homopolymer (PPH-6; $MFR_2$ of 0.2 g/10 min; blend of recycled material (Blend A2) and Glass Fibers;
- Comparative Example (CE2): one first polypropylene homopolymer (PPH-1, $MFR_2$ of 20 g/10 min) and a second polypropylene homopolymer (PPH-6; $MFR_2$ of 0.2 g/10 min; blend of recycled material (Blend A2) and Glass Fibers;
- Comparative Example (CE3): one first polypropylene homopolymer (PPH-1, $MFR_2$ of 20 g/10 min) and a second polypropylene homopolymer (PPH-6; $MFR_2$ of 0.2 g/10 min; blend of recycled material (Blend A2) and Glass Fibers;
- Inventive Example (IE1): one polypropylene homopolymer (PPH-2; $MFR_2$ of 20 g/10 min), one blend of recycled material (Blend A1), and Glass Fibers;

Glass fibers may be obtained from one of the following suppliers: OC (Owens Corning), PPG / NEG, Johns Manville, 3B, Jushi, Taiwan Glass, Camelyaf, CPIC, Taishan, Glass fibers 1.2. (average length 4 mm, average diameter 13 μm) and 4.1 (average length 4.5 mm, average diameter 13 μm) are used.

The following additives were used: Antioxidants: AO1 (Irganox 1010 (FF)), AO2 (Irganox B 225 (FF)), AO3 (Irganox PS-802 FL); Black Pigment (Plasblak PE6121, commercially available from Cabot); Dosing agent: HC001A-B1, PP homopolymer power; Coupling agent: AP 1.5, polypropylene highly functionalized with maleic anhydride.

As can be seen in Table 1 the values for tensile modulus, tensile stress at yield and tensile stress at break of the polyolefin compositions according to the invention (IE1) are in each case higher than said values of the comparative examples (CE1-CE3).

Furthermore, melt flow rate of the inventive examples is also higher than the melt flow rate of the comparative example.

Table 1

| Components | unit | IE1 | CE1 | CE2 | CE3 |
|---|---|---|---|---|---|
| PPH-1 | wt% | | 45.2 | 36,9 | 31,1 |
| PPH-2 | wt% | 45,3 | | | |
| PPH-6 | wt% | | 16 | 16 | 16 |
| Blend A1 | wt% | 31,00 | | | |
| Blend A2 | wt% | | 15,4 | 25,0 | 30,8 |
| GLASS 1.2 | wt% | 20 | 20 | 20 | 20 |
| AP1.5 | wt% | 1,0 | 1,0 | 1,0 | 1,0 |
| HC001A-B1 | wt% | 1,4 | 1,3 | | |
| BLACK Pigment | wt% | 0,7 | 0,7 | 0,7 | 0,7 |
| AO1 | wt% | | 0,3 | 0,3 | 0,3 |
| AO2 | wt% | 0,4 | 0,1 | 0,1 | 0,1 |
| AO3 | wt% | 0,3 | 0,4 | 0,4 | 0,4 |
| | | | | | |
| MFR 230°C/2,16kg | g/10min | 5,41 | 2,1 | 2,2 | 2,34 |
| Ash content | wt% | 20,52 | 20,55 | 20,96 | 20,76 |
| Tensile modulus 23°C | MPa | 5139 | 4877 | 4780 | 4711 |
| SD | | | 11 | 10 | 6 |
| Tensile stress at yield 23°C (@ 50 mm/min) | MPa | 84,34 | 72,34 | 69,5 | 68,15 |
| Tensile stress at break (@50 mm/min) 23°C | MPa | 83,88 | 71 | 68,1 | 66,81 |
| Tensile modulus 80°C | MPa | 3099 | 2766 | 2555 | 2637 |
| Tensile stress at break (@50 mm/min) 80°C | MPa | 45,44 | 37,78 | 34,5 | 34,83 |
| Tensile strain at break (@50 mm/min) 80°C | % | 5,58 | 7,03 | 7,65 | 7,63 |
| Charpy 1eA +23°C | kJ/m$^2$ | 8,5 | 7,8 | 7,9 | 7,6 |
| Charpy 1eU +23°C | kJ/m$^2$ | 33,5 | 38,7 | 36,9 | 37,0 |

As illustrated in Table 1 MFR, tensile modulus and tensile stress are increased (i.e. better) in the inventive example IE1 compared to the comparative examples CE1-CE3. This is surprising considering the different amounts of recyclate in the inventive example (31wt %) and comparative examples (15,4 - 30,8 wt %). Furthermore, the Charpy value of IE1 is higher than the one of CE1-CE3 (even if compared to CE1 and CE2 that have lower recyclate amounts).

**Claims**

1. Polyolefin composition comprising

   a) 30-60 wt% (based on the overall weight of the polyolefin composition) of at least one polypropylene homopolymer,

b) 15-40 wt% (based on the overall weight of the polyolefin composition) of a mixed-plastics polypropylene blend of recycled material having

(i) a crystalline fraction (CF) content determined according to CRYSTEX QC analysis in the range from 91.0 to 94.0 wt.-%, and

(ii) a soluble fraction (SF) content determined according to CRYSTEX QC analysis in the range from 6.0 to 9.0 wt.-%, whereby

(iii) said crystalline fraction (CF) has a propylene content (C3(CF)) as determined by FT-IR spectroscopy calibrated by quantitative $^{13}$C-NMR spectroscopy, in the range from 95.0 to 99.0 wt.-%; preferably 96.0 to 98.0 wt.-% and whereby

(iv) said crystalline fraction (CF) has an ethylene content (C2(CF)), as determined by FT-IR spectroscopy calibrated by quantitative $^{13}$C-NMR spectroscopy, in the range from 1.0 to 5.0 wt.-% preferably 2.0 to 4.0 wt.-%, more preferably 2.5 to 3.5 wt.-%; and

(v) said soluble fraction (SF) has an intrinsic viscosity (iV(SF)) in the range from 1.10 to below 1.50 dl/g, preferably 1.20 to 1.40 dl/g; and whereby

(vi) the mixed-plastics polypropylene blend has inorganic residues as measured by calcination analysis (TGA) according to DIN ISO 1172:1996 of 0.05 to 3.0 wt.-%, preferably 0.05 to 2.5 wt.-%, optionally 1.0 to 2.5 wt.-% with respect to the mixed-plastics polypropylene blend; and whereby

(vii) the mixed-plastics polypropylene blend does not contain benzene above the detection limit of HS GC-MS 80°C/2h; and whereby

(viii) the mixed-plastics polypropylene blend has a CIELAB color space (L*a*b*) of

- L* from 72.0 to 97.0 preferably from 80.0 to 97.0;
- a* from -5.0 to 0.0;
- b* from 0.0 to below 22.0.

c) 15-30 wt% (based on the overall weight of the polyolefin composition) of glass fibers;

d) 0.5-2.5 wt% (based on the overall weight of the polyolefin composition) of at least one coupling agent, and optionally further additives, wherein the sum of all ingredients adds always up to 100 wt%,

wherein the polyolefin composition is **characterized by**

- a melt flow rate MFR$_2$ (230°C, 2.16 kg, measured according to ISO 1133) of at least 5 g/10 min;
- a tensile modulus at 23°C of at least 5000 MPa (ISO 527-2), and
- a tensile stress at yield at 23°C of at least 80 MPa (ISO 527-2),.

2. Polyolefin composition according to claim 1, **characterized in that** it comprises

a) 40-50 wt%, (based on the overall weight of the polyolefin composition) of the at least one polypropylene homopolymer,

b) 25-35 wt% (based on the overall weight of the polyolefin composition) of the mixed-plastics polypropylene blend;

c) 18-25 wt% (based on the overall weight of the polyolefin composition) of glass fibers;

d) 0.5-2.0 wt% (based on the overall weight of the polyolefin composition) of the at least one coupling agent, and optionally further additives, wherein the sum of all ingredients adds always up to 100 wt%.

3. Polyolefin composition according to one of the preceding claims, **characterized by** a melt flow rate MFR$_2$ (ISO 1133, 2.16 kg, 230°C, measured according to ISO 1133) in the range between 5 and 20 g/10 min, preferably between 5 and 15 g/10min, more preferably between 5 and 10 g/10min, even more preferably between 5 and 8 g/10min.

4. Polyolefin composition according to one of the preceding claims **characterized by** a tensile modulus (ISO 527-2) of at least 5100 MPa, preferably of at least 5200 MPa; more preferably of at least 5500 MPa, in particular in a range between 5000 and 10000 MPa, more in particular in a range between 5000 and 8000 MPa.

5. Polyolefin composition according to one of the preceding claims, **characterized by** a tensile stress at yield at 23°C (50 mm/min, ISO 527-2) of at least 81 MPa, preferably at least 82 MPa, more preferably of at least 83 MPa, even more preferably of at least 84 MPa.

6. Polyolefin composition according to one of the preceding claims, **characterized by** a tensile stress at break at 23°C (50 mm/min, ISO 527-2) of at least 80.5 MPa, preferably at least 82 MPa, more preferably of at least 83 MPa.

7. Polyolefin composition according to one of the preceding claims, **characterized in that** it comprises

> a1) at least one first polypropylene homopolymer;
> a2) at least one second polypropylene homopolymer;

wherein the at least one first polypropylene homopolymer, and the at least one second polypropylene homopolymer differ from each other in their melt flow rate $MFR_2$ (230°C, 2.16 kg load, measured according to ISO 1133).

8. Polyolefin composition according to one of the preceding claims, **characterized in that** the polypropylene homopolymer is selected from a group comprising

> - at least one polypropylene homopolymer (PPH-1) having a melt flow rate $MFR_2$ (230°C, 2.16 kg, measured according to ISO 1133) in the range of 5 to 15 g/10 min, preferably of 5 to 10 g/10min, more preferably of 8 g/10 min;
> - at least one polypropylene homopolymer (PPH-2) having a melt flow rate $MFR_2$ (230°C, 2.16 kg, measured according to ISO 1133) in the range of range of 10 to 30 g/10min, preferably of 15 to 25 g/10min, more preferably of 20 g/10 min;
> - at least one polypropylene homopolymer (PPH-3) having a melt flow rate $MFR_2$ (230°C, 2.16 kg, measured according to ISO 1133) in the range of 60 to 100 g/10 min, preferably of 70 to 80 g/10min, more preferably of 75 g/10 min;
> - at least one polypropylene homopolymer (PPH-4) having a melt flow rate $MFR_2$ (230°C, 2.16 kg, measured according to ISO 1133) in the range of 100 to 150 g/10 min, preferably of 110 to 130 g/10 min, preferably of 125 g/10 min;
> - at least one polypropylene homopolymer (PPH-5) having a melt flow rate $MFR_2$ (230°C, 2.16 kg, measured according to ISO 1133) in the range of 600 to 1000 g/10 min, preferably of 700 to 900 g/10 min, preferably of 800 g/10 min;
> - at least one polypropylene homopolymer (PPH-6) having a melt flow rate $MFR_2$ (230°C, 2.16 kg, measured according to ISO 1133) of $\leq$ 1.5 g/10 min, preferably in the range between 0.15 to 0.5 g/10min, more preferably of 0.3 to 0.45 g/10 min, even more preferably of 0.2 g/ 10 min.

9. Polyolefin composition according to one of the preceding claims **characterized in that** the mixed-plastics polypropylene blend has a melt flow rate (ISO1133, 2.16kg; 230°C) of 2.0 to 50 g/10min, preferably 2.0 to 30 g/10min, more preferably 2 to 20 g/10min and most preferably 2 to 12 g/10min.

10. Polyolefin composition according to one of the preceding claims, **characterized in that** the mixed-plastics polypropylene blend contains one or more of the following substances:

> a) polystyrene
> b) polyamide-6
> c) limonene as determined by using solid phase microextraction (HS-SPME-GC-MS)
> d) fatty acids as determined by using solid phase microextraction (HS-SPME-GC-MS).

11. Polyolefin composition according to one of the preceding claims **characterized in that** the glass fibers have a length of 2.0 to 10.0 mm, preferably in the range of 2.0 to 8.0 mm, even more preferably in the range of 2.0 to 6.0 mm and a diameter of from 5 to 20 $\mu$m, more preferably from 8 to 18 $\mu$m, still more preferably 8 to 15 $\mu$m.

12. Polyolefin composition according to one of the preceding claims **characterized in that** the at least one coupling agent is a functionalized polypropylene, in particular a polypropylene functionalized with maleic anhydride (MAH).

13. Use of a polyolefin composition according to one of the preceding claims in the manufacture of structural products, appliances, automotive articles, pipes, films, geo-membranes, roofing applications, pond liners, packaging, caps and closures, as well as in core layer(s) of a multilayer polyolefin sheet or film.

**14.** An article comprising the polyolefin composition according to one of the claims 1-12.

**15.** A process for preparing the polyolefin composition according to any one of the claims 1 to 12, comprising the steps of

- providing a mixture of the at least one polypropylene homopolymer; the mixed-plastics polypropylene blend; and the at least one coupling agent in the required amounts;
- melting the mixture in an extruder, and
- optionally pelletizing the obtained polyolefin composition.

**Patentansprüche**

**1.** Polyolefinzusammensetzung umfassend

a) 30-60 Gew.-% (bezogen auf das Gesamtgewicht der Polyolefin-Zusammensetzung) mindestens eines Polypropylen-Homopolymers,
b) 15-40 Gew.-% (bezogen auf das Gesamtgewicht der Polyolefin-Zusammensetzung) eines Mischkunststoff-Polypropylen-Gemisches aus recyceltem Material mit

(i) einen Gehalt an kristalliner Fraktion (CF), bestimmt nach der CRYSTEX QC-Analyse, im Bereich von 91,0 bis 94,0 Gew.-%, und
(ii) einen Gehalt an löslicher Fraktion (SF), bestimmt nach der CRYSTEX QC-Analyse, im Bereich von 6,0 bis 9,0 Gew.-%, wobei
(iii) die kristalline Fraktion (CF) einen Propylengehalt (C3(CF)), bestimmt durch FT-IR-Spektroskopie, kalibriert durch quantitative $^{13}$ C-NMR-Spektroskopie, im Bereich von 95,0 bis 99,0 Gew.-%, vorzugsweise 96,0 bis 98,0 Gew.-%, aufweist und wobei
(iv) die kristalline Fraktion (CF) einen Ethylengehalt (C2(CF)), bestimmt durch FT-IR-Spektroskopie, kalibriert durch quantitative $^{13}$C-NMR-Spektroskopie, im Bereich von 1,0 bis 5,0 Gew.-%, vorzugsweise 2,0 bis 4,0 Gew.-%, stärker bevorzugt 2,5 bis 3,5 Gew.-%, aufweist und
(v) die lösliche Fraktion (SF) eine intrinsische Viskosität (iV(SF)) im Bereich von 1,10 bis unter 1,50 dl/g, vorzugsweise 1,20 bis 1,40 dl/g aufweist; und
wobei
(vi) das Mischkunststoff-Polypropylen-Gemisch anorganische Rückstände, gemessen durch Kalzinierungsanalyse (TGA) gemäß DIN ISO 1172:1996, von 0,05 bis 3,0 Gew.-%, vorzugsweise 0,05 bis 2,5 Gew.-%, optional 1,0 bis 2,5 Gew.-%, bezogen auf das Mischkunststoff-Polypropylen-Gemisch, aufweist; und
wobei
(vii) das Mischkunststoff-Polypropylen-Gemisch kein Benzol oberhalb der Nachweisgrenze des HS GC-MS 80°C/2h enthält; und
wobei
(viii) das Polypropylen-Mischpolymer einen CIELAB-Farbraum (L*a*b*) von

- L* von 72,0 bis 97,0, vorzugsweise von 80,0 bis 97,0;
- a* von -5,0 bis 0,0;
- b* von 0,0 bis unter 22,0 aufweist;

c) 15-30 Gew.-% (bezogen auf das Gesamtgewicht der Polyolefin-Zusammensetzung) an Glasfasern;
d) 0,5-2,5 Gew.-% (bezogen auf das Gesamtgewicht der Polyolefin-Zusammensetzung) mindestens eines Haftvermittlers und gegebenenfalls weitere Zusatzstoffe, wobei die Summe aller Inhaltsstoffe stets bis zu 100 Gew.-% beträgt,

wobei die Polyolefin-Zusammensetzung **gekennzeichnet ist durch**

- eine Schmelzflussrate $MFR_2$ (230°C, 2,16 kg, gemessen nach ISO 1133) von mindestens 5 g/10 min;
- einen Zugmodul bei 23°C von mindestens 5000 MPa (ISO 527-2) und
- eine Streckspannung bei 23°C von mindestens 80 MPa (ISO 527-2),.

**2.** Polyolefinzusammensetzung nach Anspruch 1, **dadurch gekennzeichnet, dass** sie umfasst

a) 40-50 Gew.-% (bezogen auf das Gesamtgewicht der Polyolefin-Zusammensetzung) des mindestens einen Polypropylen-Homopolymers,

b) 25-35 Gew.-% (bezogen auf das Gesamtgewicht der Polyolefin-Zusammensetzung) des Mischkunststoff-Polypropylen-Gemisches;

c) 18-25 Gew.-% (bezogen auf das Gesamtgewicht der Polyolefin-Zusammensetzung) an Glasfasern;

d) 0,5-2,0 Gew.-% (bezogen auf das Gesamtgewicht der Polyolefin-Zusammensetzung) des mindestens einen Haftvermittlers und gegebenenfalls weitere Zusatzstoffe, wobei die Summe aller Bestandteile stets bis zu 100 Gew.-% beträgt.

3. Polyolefinzusammensetzung nach einem der vorhergehenden Ansprüche, **gekennzeichnet durch** eine Schmelz-flussrate $MFR_2$ (ISO 1133, 2,16 kg, 230°C, gemessen nach ISO 1133) im Bereich zwischen 5 und 20 g/10 min, vorzugsweise zwischen 5 und 15 g/10min, bevorzugter zwischen 5 und 10 g/10min, besonders bevorzugt zwischen 5 und 8 g/10min.

4. Polyolefinzusammensetzung nach einem der vorhergehenden Ansprüche, **gekennzeichnet durch** einen Zugmodul (ISO 527-2) von mindestens 5100 MPa, vorzugsweise von mindestens 5200 MPa, noch bevorzugter von mindestens 5500 MPa, insbesondere in einem Bereich zwischen 5000 und 10000 MPa, noch spezieller in einem Bereich zwischen 5000 und 8000 MPa.

5. Polyolefinzusammensetzung nach einem der vorhergehenden Ansprüche, **gekennzeichnet durch** eine Streckspannung bei 23°C (50 mm/min, ISO 527-2) von mindestens 81 MPa, vorzugsweise von mindestens 82 MPa, bevorzugter von mindestens 83 MPa, besonders bevorzugt von mindestens 84 MPa.

6. Polyolefinzusammensetzung nach einem der vorhergehenden Ansprüche, **gekennzeichnet durch** eine Bruchspannung bei 23°C (50 mm/min, ISO 527-2) von mindestens 80,5 MPa, vorzugsweise von mindestens 82 MPa, besonders bevorzugt von mindestens 83 MPa.

7. Polyolefinzusammensetzung nach einem der vorhergehenden Ansprüche, **dadurch gekennzeichnet, dass** sie umfasst

a1) mindestens ein erstes Polypropylen-Homopolymer;
a2) mindestens ein zweites Polypropylen-Homopolymer;

wobei sich das mindestens eine erste Polypropylen-Homopolymer und das mindestens eine zweite Polypropylen-Homopolymer in ihrer Schmelzflussrate $MFR_2$ (230°C, 2,16 kg Last, gemessen nach ISO 1133) voneinander unterscheiden.

8. Polyolefinzusammensetzung nach einem der vorhergehenden Ansprüche, **dadurch gekennzeichnet, dass** das Polypropylen-Homopolymer aus einer Gruppe ausgewählt ist, die umfasst

- mindestens ein Polypropylen-Homopolymer (PPH-1) mit einer Schmelzflussrate $MFR_2$ (230°C, 2,16 kg, gemessen nach ISO 1133) im Bereich von 5 bis 15 g/10 min, vorzugsweise von 5 bis 10 g/10 min, besonders bevorzugt von 8 g/10 min;

- mindestens ein Polypropylen-Homopolymer (PPH-2) mit einer Schmelzflussrate $MFR_2$ (230°C, 2,16 kg, gemessen nach ISO 1133) im Bereich von 10 bis 30 g/10 min, vorzugsweise von 15 bis 25 g/10 min, besonders bevorzugt von 20 g/10 min;

- mindestens ein Polypropylen-Homopolymer (PPH-3) mit einer Schmelzflussrate $MFR_2$ (230°C, 2,16 kg, gemessen nach ISO 1133) im Bereich von 60 bis 100 g/10 min, vorzugsweise von 70 bis 80 g/10 min, besonders bevorzugt von 75 g/10 min;

- mindestens ein Polypropylen-Homopolymer (PPH-4) mit einer Schmelzflussrate $MFR_2$ (230°C, 2,16 kg, gemessen nach ISO 1133) im Bereich von 100 bis 150 g/10 min, vorzugsweise von 110 bis 130 g/10 min, vorzugsweise von 125 g/10 min;

- mindestens ein Polypropylen-Homopolymer (PPH-5) mit einer Schmelzflussrate $MFR_2$ (230°C, 2,16 kg, gemessen nach ISO 1133) im Bereich von 600 bis 1000 g/10 min, vorzugsweise von 700 bis 900 g/10 min, vorzugsweise von 800 g/10 min;

- mindestens ein Polypropylen-Homopolymer (PPH-6) mit einer Schmelzflussrate $MFR_2$ (230°C, 2,16 kg, gemessen nach ISO 1133) von $\leq$ 1,5 g/10 min, vorzugsweise im Bereich zwischen 0,15 bis 0,5 g/10 min, bevorzugter von 0,3 bis 0,45 g/10 min, besonders bevorzugt von 0,2 g/10 min.

9. Polyolefinzusammensetzung nach einem der vorhergehenden Ansprüche, **dadurch gekennzeichnet, dass** das Mischkunststoff-Polypropylen-Gemisch eine Schmelzflussrate (ISO1133, 2,16 kg; 230°C) von 2,0 bis 50 g/10min, vorzugsweise 2,0 bis 30 g/10min, bevorzugter 2 bis 20 g/10min und am meisten bevorzugt 2 bis 12 g/10min aufweist.

10. Polyolefinzusammensetzung nach einem der vorhergehenden Ansprüche, **dadurch gekennzeichnet, dass** das Mischkunststoff-Polypropylen-Gemisch eine oder mehrere der folgenden Substanzen enthält:

    a) Polystyrol
    b) Polyamid-6
    c) Limonen, bestimmt durch Festphasenmikroextraktion (HS-SPME-GC-MS)
    d) Fettsäuren, die mit Hilfe der Festphasenmikroextraktion (HS-SPME-GC-MS) bestimmt wurden.

11. Polyolefinzusammensetzung nach einem der vorhergehenden Ansprüche, **dadurch gekennzeichnet, dass** die Glasfasern eine Länge von 2,0 bis 10,0 mm, vorzugsweise im Bereich von 2,0 bis 8,0 mm, bevorzugter im Bereich von 2,0 bis 6,0 mm und einen Durchmesser von 5 bis 20 $\mu$m, besonders bevorzugt von 8 bis 18 $\mu$m, noch bevorzugter von 8 bis 15 $\mu$m aufweisen.

12. Polyolefinzusammensetzung nach einem der vorhergehenden Ansprüche, **dadurch gekennzeichnet, dass** der mindestens eine Haftvermittler ein funktionalisiertes Polypropylen ist, insbesondere ein mit Maleinsäureanhydrid (MAH) funktionalisiertes Polypropylen.

13. Verwendung einer Polyolefinzusammensetzung nach einem der vorhergehenden Ansprüche bei der Herstellung von Bauprodukten, Geräten, Kraftfahrzeugartikeln, Rohren, Folien, Geomembranen, Bedachungen, Teichfolien, Verpackungen, Kappen und Verschlüssen sowie in der/den Kernschicht(en) einer mehrschichtigen Polyolefinbahn oder -folie.

14. Gegenstand, umfassend die Polyolefinzusammensetzung nach einem der Ansprüche 1-12.

15. Verfahren zur Herstellung der Polyolefinzusammensetzung nach einem der Ansprüche 1 bis 12, umfassend die Schritte

    - Bereitstellung eines Gemischs aus dem mindestens einen Polypropylen-Homopolymer, dem Mischkunststoff-Polypropylen-Gemisch und dem mindestens einen Haftvermittler in den erforderlichen Mengen;
    - Schmelzen der Mischung in einem Extruder und
    - gegebenenfalls Granulierung der erhaltenen Polyolefin-Zusammensetzung.

**Revendications**

1. Composition de polyoléfine comprenant

    a) 30-60% en poids (sur la base du poids total de la composition de polyoléfine) d'au moins un homopolymère de polypropylène,
    b) 15-40% en poids (sur la base du poids total de la composition de polyoléfine) d'un mélange de matières plastiques mixtes et de polypropylène de matériau recyclé ayant

        (i) une teneur en fraction cristalline (CF) déterminée selon l'analyse CRYSTEX QC comprise entre 91,0 et 94,0% en poids, et
        (ii) une teneur en fraction soluble (SF) déterminée selon l'analyse CRYSTEX QC comprise entre 6,0 et 9,0% en poids, moyennant quoi
        (iii) ladite fraction cristalline (CF) a une teneur en propylène (C3(CF)), telle que déterminée par spectroscopie FT-IR calibrée par spectroscopie $^{13}$C-NMR quantitative, comprise entre 95,0 et 99,0% en poids ; de préférence entre 96,0 et 98,0% en poids, et moyennant quoi
        (iv) ladite fraction cristalline (CF) a une teneur en éthylène (C2(CF)), telle que déterminée par spectroscopie FT-IR calibrée par spectroscopie $^{13}$C-NMR quantitative, comprise entre 1,0 et 5,0% en poids, de préférence entre 2,0 et 4,0% en poids, plus préférablement entre 2,5 et 3,5% en poids ; et
        (v) ladite fraction soluble (SF) a une viscosité intrinsèque (iV(SF)) comprise entre 1,10 et moins de 1,50 dl/g, de préférence entre 1,20 et 1,40 dl/g ; et

moyennant quoi

(vi) le mélange de matières plastiques mixtes et de polypropylène a des résidus inorganiques, tels que mesurés par analyse de calcination (TGA) selon DIN ISO 1172:1996, de 0,05 à 3,0% en poids, de préférence de 0,05 à 2,5% en poids, éventuellement de 1,0 à 2,5% en poids par rapport au mélange de matières plastiques mixtes et de polypropylène ; et

moyennant quoi

(vii) le mélange de matières plastiques mixtes et de polypropylène ne contient pas de benzène au-delà de la limite de détection de HS GC-MS à 80°C/2h ; et

moyennant quoi

(viii) le mélange de matières plastiques mixtes et de polypropylène a un espace colorimétrique CIELAB (L*a*b*) de

- L* de 72,0 à 97,0, de préférence de 80,0 à 97,0 ;
- a* de -5,0 à 0,0 ;
- b* de 0,0 à moins de 22,0.

c) 15-30% en poids (sur la base du poids total de la composition de polyoléfine) de fibres de verre ;
d) 0,5-2,5% en poids (sur la base du poids total de la composition de polyoléfine) d'au moins un agent d'accrochage, et éventuellement d'autres additifs, dans laquelle la somme de tous les ingrédients s'élève toujours à 100% en poids,

dans laquelle la composition de polyoléfine est **caractérisée par**

- un indice de fluidité à chaud $MFR_2$ (230°C, 2,16 kg, mesuré selon ISO 1133) d'au moins 5 g/10 min ;
- un module de traction à 23°C d'au moins 5000 MPa (ISO 527-2), et
- une contrainte de traction à 23°C d'au moins 80 MPa (ISO 527-2).

2. Composition de polyoléfine selon la revendication 1, **caractérisée en ce qu'**elle comprend

a) 40-50% en poids (sur la base du poids total de la composition de polyoléfine) d'au moins un homopolymère de polypropylène,
b) 25-35% en poids (sur la base du poids total de la composition de polyoléfine) du mélange de matières plastiques mixtes et de polypropylène ;
c) 18-25% en poids (sur la base du poids total de la composition de polyoléfine) de fibres de verre ;
d) 0,5-2,0% en poids (sur la base du poids total de la composition de polyoléfine) d'au moins un agent d'accrochage, et éventuellement d'autres additifs, dans laquelle la somme de tous les ingrédients s'élève toujours à 100% en poids.

3. Composition de polyoléfine selon l'une des revendications précédentes, **caractérisée par** un indice de fluidité à chaud $MFR_2$ (ISO 1133, 2,16 kg, 230°C, mesuré selon ISO 1133) compris entre 5 et 20 g/10 min, de préférence entre 5 et 15 g/10 min, plus préférablement entre 5 et 10 g/10 min, encore plus préférablement entre 5 et 8 g/10 min.

4. Composition de polyoléfine selon l'une des revendications précédentes, **caractérisée par** un module de traction (ISO 527-2) d'au moins 5100 MPa, de préférence d'au moins 5200 MPa ; plus préférablement d'au moins 5500 MPa, en particulier compris entre 5000 et 10000 MPa, plus particulièrement compris entre 5000 et 8000 MPa.

5. Composition de polyoléfine selon l'une des revendications précédentes, **caractérisée par** une contrainte de traction à la limite d'élasticité à 23°C (50 mm/min, ISO 527-2) d'au moins 81 MPa, de préférence d'au moins 82 MPa, plus préférablement d'au moins 83 MPa, encore plus préférablement d'au moins 84 MPa.

6. Composition de polyoléfine selon l'une des revendications précédentes, **caractérisée par** une contrainte de traction à la rupture à 23°C (50 mm/min, ISO 527-2) d'au moins 80,5 MPa, de préférence d'au moins 82 MPa, plus préférablement d'au moins 83 MPa.

7. Composition de polyoléfine selon l'une des revendications précédentes, **caractérisée en ce qu'**elle comprend

a1) au moins un premier homopolymère de polypropylène ;
a2) au moins un second homopolymère de polypropylène ;

dans laquelle l'au moins un premier homopolymère de polypropylène et l'au moins un second homopolymère de polypropylène diffèrent l'un de l'autre par leur indice de fluidité à chaud $MFR_2$ (230°C, 2,16 kg de charge, mesuré selon ISO 1133).

8. Composition de polyoléfine selon l'une des revendications précédentes, **caractérisée en ce que** l'homopolymère de polypropylène est choisi dans un groupe comprenant

> - au moins un homopolymère de polypropylène (PPH-1) ayant un indice de fluidité à chaud $MFR_2$ (230°C, 2,16 kg, mesuré selon ISO 1133) compris entre 5 et 15 g/10 min, de préférence entre 5 et 10 g/10 min, plus préférablement de 8 g/10 min ;
> - au moins un homopolymère de polypropylène (PPH-2) ayant un indice de fluidité à chaud $MFR_2$ (230°C, 2,16 kg, mesuré selon ISO 1133) compris entre 10 et 30 g/10 min, de préférence entre 15 et 25 g/10 min, plus préférablement de 20 g/10 min ;
> - au moins un homopolymère de polypropylène (PPH-3) ayant un indice de fluidité à chaud $MFR_2$ (230°C, 2,16 kg, mesuré selon ISO 1133) compris entre 60 et 100 g/10 min, de préférence entre 70 et 80 g/10 min, plus préférablement de 75 g/10 min ;
> - au moins un homopolymère de polypropylène (PPH-4) ayant un indice de fluidité à chaud $MFR_2$ (230°C, 2,16 kg, mesuré selon ISO 1133) compris entre 100 et 150 g/10 min, de préférence entre 110 et 130 g/10 min, de préférence de 125 g/10 min ;
> - au moins un homopolymère de polypropylène (PPH-5) ayant un indice de fluidité à chaud $MFR_2$ (230°C, 2,16 kg, mesuré selon ISO 1133) compris entre 600 et 1000 g/10 min, de préférence entre 700 et 900 g/10 min, de préférence de 800 g/10 min ;
> - au moins un homopolymère de polypropylène (PPH-6) ayant un indice de fluidité à chaud $MFR_2$ (230°C, 2,16 kg, mesuré selon ISO 1133) $\leq$ à 1,5 g/10 min, de préférence compris entre 0,15 et 0,5 g/10 min, de préférence entre 0,3 et 0,45 g/10 min, encore plus préférablement de 0,2 g/10 min.

9. Composition de polyoléfine selon l'une des revendications précédentes, **caractérisée en ce que** le mélange de matières plastiques mixtes et de polypropylène a un indice de fluidité à chaud (ISO 1133, 2,16 kg ; 230°C) de 2,0 à 50 g/10 min, de préférence de 2,0 à 30 g/10 min, plus préférablement de 2 à 20 g/10 min et le plus préférablement de 2 à 12 g/10 min.

10. Composition de polyoléfine selon l'une des revendications précédentes, **caractérisée en ce que** le mélange de matières plastiques mixtes et de polypropylène contient une ou plusieurs des substances suivantes :

> a) polystyrène
> b) polyamide-6
> c) limonène, tel que déterminé par micro-extraction en phase solide (HS-SPME-GC-MS)
> d) acides gras, tels que déterminés par micro-extraction en phase solide (HS-SPME-GC-MS).

11. Composition de polyoléfine selon l'une des revendications précédentes, **caractérisée en ce que** les fibres de verre ont une longueur de 2,0 à 10,0 mm, de préférence comprise entre 2,0 et 8,0 mm, encore plus préférablement comprise entre 2,0 et 6,0 mm, et un diamètre compris entre 5 et 20 $\mu$m, plus préférablement entre 8 et 18 $\mu$m, encore plus préférablement entre 8 à 15 $\mu$m.

12. Composition de polyoléfine selon l'une des revendications précédentes, **caractérisée en ce que** l'au moins un agent d'accrochage est un polypropylène fonctionnalisé, en particulier un polypropylène fonctionnalisé avec de l'anhydride maléique (MAH).

13. Utilisation d'une composition de polyoléfine selon l'une des revendications précédentes dans la fabrication de produits structuraux, d'appareils, d'articles automobiles, de tuyaux, de films, de géomembranes, d'applications de toiture, de revêtements de bassin, de conditionnements, de bouchons et de fermetures, ainsi que dans une (des) couche(s) centrale(s) d'une feuille ou d'un film de polyoléfine multicouche.

14. Article comprenant la composition de polyoléfine selon l'une des revendications 1 à 12.

15. Procédé de préparation de la composition de polyoléfine selon l'une quelconque des revendications 1 à 12, comprenant les étapes de :

- fourniture d'un mélange de l'au moins un homopolymère de polypropylène ; du mélange de matières plastiques mixtes et de polypropylène ; et de l'au moins un agent d'accrochage dans les quantités requises ;
- fusion du mélange dans une extrudeuse, et
- éventuellement, granulation de la composition de polyoléfine obtenue.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014167493 A1
- EP 2845876 B1
- EP 3406662 A1
- WO 03031174 A2

**Non-patent literature cited in the description**

- **BAJRACHARYA et al.** Experimental and theoretical studies on the properties of injection moulded glass fibre reinforced mixed plastics composites. *Composites Part A: Applied Science and Manufacturing*, 2016, vol. 84, 393-405
- **BAJRACHARYA et al.** Durability characteristics and property prediction of glass fibre reinforced mixed plastics composites. *Composites Part B: Engineering*, 2017, vol. 116, 16-29
- **DEMETS, RUBEN et al.** Development and application of an analytical method to quantify odour removal in plastic waste recycling processes. *Resources, Conservation and Recycling*, 2020, vol. 161, 104907
- *CHEMICAL ABSTRACTS*, 6683-19-8
- *CHEMICAL ABSTRACTS*, 31570-04-4
- *CHEMICAL ABSTRACTS*, 693- 36-7
- *CHEMICAL ABSTRACTS*, 11097-59-9
- *CHEMICAL ABSTRACTS*, 1592-23-0
- *CHEMICAL ABSTRACTS*, 557-05-1
- *CHEMICAL ABSTRACTS*, 60676-86-0
- *CHEMICAL ABSTRACTS*, 7631-86-9
- *CHEMICAL ABSTRACTS*, 112926-00-8
- *CHEMICAL ABSTRACTS*, 1318-74-7
- *CHEMICAL ABSTRACTS*, 1344-00-9
- *CHEMICAL ABSTRACTS*, 92704-41-1
- *CHEMICAL ABSTRACTS*, 1327-36-2
- *CHEMICAL ABSTRACTS*, 1344-95-2
- *CHEMICAL ABSTRACTS*, 1344-01-0
- *CHEMICAL ABSTRACTS*, 52829-07-9
- *CHEMICAL ABSTRACTS*, 1843-05-6
- *CHEMICAL ABSTRACTS*, 532-32-1
- *CHEMICAL ABSTRACTS*, 135861-56-2
- *CHEMICAL ABSTRACTS*, 97593-29-8
- *CHEMICAL ABSTRACTS*, 71786-60-2
- *CHEMICAL ABSTRACTS*, 61791-31-9
- *CHEMICAL ABSTRACTS*, 204-393-1
- **LJILJANA JEREMIC** ; **ANDREAS ALBRECHT** ; **MARTINA SANDHOLZER** ; **MARKUS GAHLEITNER**. Rapid characterization of high-impact ethylene-propylene copolymer composition by crystallization extraction separation: comparability to standard separation methods. *International Journal of Polymer Analysis and Characterization*, 2020, vol. 25 (8), 581-596
- *CHEMICAL ABSTRACTS*, 128-37-0
- **G. SINGH** ; **A. KOTHARI** ; **V. GUPTA**. *Polymer Testing*, 2009, vol. 28 (5), 475
- **Z. ZHOU** ; **R. KUEMMERLE** ; **X. QIU** ; **D. REDWINE** ; **R. CONG** ; **A. TAHA** ; **D. BAUGH** ; **B. WINNIFORD**. *J. Mag. Reson.*, 2007, vol. 187, 225
- **V. BUSICO** ; **P. CARBONNIERE** ; **R. CIPULLO** ; **C. PELLECCHIA** ; **J. SEVERN** ; **G. TALARICO**. *Macromol. Rapid Commun.*, 2007, vol. 28, 1128
- **CHENG, H. N.** *Macromolecules*, 1984, vol. 17, 1950
- **W-J. WANG** ; **S. ZHU**. *Macromolecules*, 2000, vol. 33, 1157
- **HEINO, E.L.** ; **LEHTINEN, A.** ; **TANNER J.** ; **SEPPÄLÄ, J.** Rheological characterization of polyethylene fractions. *Neste Oy, Porvoo, Finland, Theor. Appl. Rheol., Proc. Int. Congr. Rheol, 11th*, 1992, vol. 1, 360-362
- **HEINO, E.L.** The influence of molecular structure on some rheological properties of polyethylene. *Borealis Polymers Oy, Porvoo, Finland, Annual Transactions of the Nordic Rheology Society*, 1995
- Definition of terms relating to the non-ultimate mechanical properties of polymers. *Pure & Appl. Chem.*, 1998, vol. 70 (3), 701-754
- **J. M. DEALY** ; **K. F. WISSBRUN**. Melt Rheology and Its Role in Plastics Processing: Theory and Applications. 1990
- **S. FILIPE**. Non-Linear Rheology of Polymer Melts. *AIP Conference Proceedings*, 2009, vol. 1152, 168-174
- **M. WILHELM**. *Macromol. Mat. Eng.*, 2002, vol. 287, 83-105

- **S. FILIPE** ; **K. HOFSTADLER** ; **K. KLIMKE** ; **A. T. TRAN**. Non-Linear Rheological Parameters for Characterisation of Molecular Structural Properties in Polyolefins. *Proceedings of Annual European Rheology Conference*, 2010, vol. 135
- **S. FILIPE** ; **K. KLIMKE** ; **A. T. TRAN** ; **J. REUSSNER**. Proceedings of Novel Non-Linear Rheological Parameters for Molecular Structural Characterisation of Polyolefins. *Novel Trends in Rheology IV, Zlin, Check Republik*, 2011
- **K. KLIMKE** ; **S. FILIPE** ; **A. T. TRAN**. Non-linear rheological parameters for characterization of molecular structural properties in polyolefins. *Proceedings of European Polymer Conference, Granada, Spain*, 2011